(19) Europäisches Patentamt
European Patent Office
Office européen des brevets

(11) **EP 4 682 418 A1**

(12) **DEMANDE DE BREVET EUROPEEN**

(43) Date de publication:
**21.01.2026 Bulletin 2026/04**

(21) Numéro de dépôt: **25190173.2**

(22) Date de dépôt: **17.07.2025**

(51) Classification Internationale des Brevets (IPC):
**F16L 37/23** (2006.01)    **F16L 37/35** (2006.01)
**F16L 55/10** (2006.01)

(52) Classification Coopérative des Brevets (CPC):
**F16L 37/23; B60K 15/00; F16L 37/35;
F16L 55/1015**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **18.07.2024 FR 2407896**

(71) Demandeur: **Staubli Faverges
74210 Faverges-Seythenex (FR)**

(72) Inventeurs:
• **MARQUES BARROCA, Serafim
73200 ALBERTVILLE (FR)**
• **MAYER, Romain
73400 UGINE (FR)**

(74) Mandataire: **Lavoix
62, rue de Bonnel
69448 Lyon Cedex 03 (FR)**

(54) **COUPE-CIRCUIT ET INSTALLATION DE MANUTENTION DE FLUIDE SOUS PRESSION COMPRENANT UN TEL COUPE-CIRCUIT**

(57) En configuration accouplée des éléments mâle (100) et femelle (200) du coupe circuit (10), des premiers et deuxième passages radiaux (126, 226) sont en communication fluidique et des joints d'étanchéité proximal (132) et distal (134) sont disposés de part et d'autre des passages radiaux. Une première soupape (110) comprend une tige distale (110C) coulissante dans un corps mâle (102). Dans une position intermédiaire d'accouplement, les joints d'étanchéité proximal et distal sont disposés de part et d'autre des passages radiaux. Les joints d'étanchéité proximal et distal sont respectivement reçus dans une gorge périphérique externe proximale (136) et dans une gorge périphérique externe distale (138) du corps mâle (102). Une première distance longitudinale (d138), mesurée entre la gorge périphérique externe distale et un plan radial médian (P126) du premier passage radial, est strictement supérieure à une deuxième distance longitudinale (d136), mesurée entre la gorge périphérique externe proximale et le plan radial médian.

FIG.1

EP 4 682 418 A1

**Description**

L'invention a trait à un coupe-circuit dit « de sécurité », pour une installation de manutention de fluide sous pression telle que, par exemple, une installation de remplissage d'un réservoir de véhicule automobile avec de l'hydrogène sous pression.

Pour éviter que le temps de remplissage d'un réservoir de véhicule automobile avec de l'hydrogène sous pression ne soit trop long, il est connu d'utiliser une pression de remplissage importante, supérieure à 300 bars et pouvant aller jusqu'à 900 bars. Compte tenu de ce niveau de pression, la connexion entre la source d'hydrogène et le réservoir du véhicule automobile doit être étanche.

Par ailleurs, on ne peut pas exclure un déplacement intempestif du réservoir du véhicule automobile en cours de remplissage, un tel déplacement pouvant résulter d'une mauvaise immobilisation du véhicule ou d'une fausse manoeuvre de la part de l'utilisateur. Un tel déplacement ne doit pas induire une altération ou une mise à l'air libre de la canalisation reliant la source d'hydrogène sous pression au réservoir du véhicule.

Pour répondre à cette problématique, EP3457016B1 divulgue un coupe-circuit avec verrouillage d'un élément mâle dans un élément femelle au moyen de billes rappelées élastiquement en position de verrouillage. Dans ce matériel, qui donne globalement satisfaction, une soupape pleine interne de l'élément mâle est manoeuvrée par une tige d'actionnement distincte de cette soupape. L'élément femelle comprend également une soupape. Lors du désaccouplement des éléments mâle et femelle du coupe-circuit, à la fermeture des soupapes, un volume de fluide, dit volume mort, est emprisonné en aval des soupapes. Lorsque le fluide est sous pression, notamment à plus de 300 bars, ce volume mort tend à déformer des joints d'étanchéité installés entre les corps des éléments mâle et femelle, dans leurs parties situées à l'extérieur de leurs gorges de réception respectives, à les altérer, voire à les éjecter de ces gorges. Pour cette raison, EP3457016B1 propose que des joints distal et proximal soient choisis avec un diamètre de tore élevé par rapport à leur diamètre interne. Ceci induit un encombrement radial et longitudinal relativement important du coupe-circuit, ce qui n'est pas compatible avec certaines applications de remplissage sous haute pression, pour lesquelles une compacité optimale est requise. En effet, compte tenu des pressions envisagées, un diamètre relativement important des éléments mâle et femelle d'un coupe-circuit induit des efforts de pression élevés, dus au fluide présent au sein du coupe-circuit.

Des problèmes analogues se posent dans d'autres installations de manutention de fluide sous pression, notamment une installation de remplissage d'un réservoir de véhicule automobile avec du gaz naturel sous pression.

Il existe donc un besoin pour un coupe-circuit présentant une compacité radiale et/ou axiale améliorée.

À cet effet, l'invention concerne un coupe-circuit pour le raccordement de deux tronçons de canalisation d'une installation de manutention de fluide sous pression, ce coupe-circuit comprenant un élément mâle et un élément femelle destinés à s'emmancher l'un dans l'autre selon un axe d'emmanchement,

l'élément mâle comprenant

- un corps mâle centré sur l'axe d'emmanchement et comprenant :

  ◦ un premier conduit interne de circulation de fluide sous pression ;
  ◦ au moins un premier passage radial reliant le premier conduit interne à une surface périphérique externe du corps mâle ; et
  ◦ une encoche externe de verrouillage,

- une première soupape, mobile dans le premier conduit interne, selon l'axe d'emmanchement, entre une position avancée de fermeture du premier conduit interne et une position reculée d'ouverture du premier conduit interne, et comprenant une portion d'obturation, qui est en butée longitudinale avant contre le corps mâle en position de fermeture de la première soupape,
- un ressort repoussant la première soupape vers la position avancée de fermeture,

l'élément femelle comprenant :

- un corps femelle comprenant un deuxième conduit interne de circulation de fluide sous pression et au moins un deuxième passage radial reliant le deuxième conduit interne à un volume interne de réception du corps mâle dans le corps femelle ;
- une deuxième soupape mobile dans le deuxième conduit interne
- au moins un organe de verrouillage reçu dans un logement de verrouillage et configuré pour passer d'une première position de verrouillage, où l'organe de verrouillage est engagé dans l'encoche externe de verrouillage, pour s'opposer au retrait axial du corps mâle hors du corps femelle en configuration accouplée des éléments mâle et femelle, à une deuxième position de libération, où le retrait axial du corps mâle hors du corps femelle est possible.

En configuration accouplée des éléments mâle et femelle,

- les premiers et deuxième passages radiaux sont en communication fluidique ;
- le ou chaque organe de verrouillage est dans la première position de verrouillage ;
- la première soupape est en position reculée d'ouverture ;
- un joint d'étanchéité proximal et un joint d'étanchéité distal sont disposés, le long de l'axe d'emmanchement, de part et d'autre des premier et deuxième passages radiaux et coopèrent radialement respectivement avec une surface radiale interne du corps femelle délimitant le volume interne et avec la surface périphérique externe du corps mâle de manière à isoler fluidiquement les premier et deuxième passages radiaux de l'extérieur du coupe-circuit.

Conformément à l'invention

- la première soupape comprend également une tige distale qui est montée coulissante, entre la position avancée de fermeture et la position reculée d'ouverture, dans un logement du corps mâle traversant une extrémité distale du corps mâle,
- un premier joint d'étanchéité radiale de tige coopère radialement avec la tige distale et avec l'extrémité distale du corps mâle;
- l'élément femelle comprend une surface d'appui configurée pour entrer en contact avec la première soupape et la déplacer, lors d'un emmanchement des éléments mâle et femelle, de la position avancée de fermeture vers la position reculée d'ouverture ;
- dans une position intermédiaire d'accouplement des éléments mâle et femelle,

  - la première soupape est en position avancée de fermeture et en contact avec la surface d'appui de l'élément femelle ;
  - chaque organe de verrouillage n'est pas dans la première position de verrouillage ;
  - le joint d'étanchéité proximal et le joint d'étanchéité distal sont disposés, le long de l'axe d'emmanchement, de part et d'autre des premier et deuxième passages radiaux et isolent fluidiquement les premier et deuxième passages radiaux de l'extérieur du coupe-circuit;

- le joint d'étanchéité proximal et le joint d'étanchéité distal sont respectivement reçus dans une gorge périphérique externe proximale et dans une gorge périphérique externe distale de la surface périphérique externe du corps mâle ;
- une première distance longitudinale, mesurée parallèlement à l'axe d'emmanchement entre la gorge périphérique externe distale et un plan radial médian du premier passage radial, est strictement supérieure à une deuxième distance longitudinale, mesurée parallèlement à l'axe d'emmanchement entre la gorge périphérique externe proximale et le plan radial médian.

Grâce à l'invention, le fait que la première soupape comprend également la tige distale, en d'autres termes le fait que la tige distale est monobloc avec le reste de la première soupape, permet de fiabiliser le fonctionnement de la soupape. En outre, le positionnement des joints d'étanchéité proximal et distal dans des gorges externes du corps mâle permet de limiter leur éjection hors des gorges externes sous l'effet de la pression du fluide en cours de désaccouplement des éléments mâle et femelle du coupe-circuit. Le fait que la première distance longitudinale est supérieure à la deuxième distance longitudinale assure un positionnement optimisé des joints d'étanchéité proximal et distal vis-à-vis du deuxième ou de chaque passage radial, lors de l'accouplement des éléments mâle et femelle du coupe-circuit. En synthèse, le coupe-circuit de l'invention présente des compacités radiale et axiale accrues, pour une section de passage et un débit comparables à ceux du matériel de l'art antérieur. De plus, le nombre de joints d'étanchéité utilisés entre les éléments mâle et femelle du coupe-circuit reste minimal, avec un joint d'étanchéité proximal et un joint d'étanchéité distal. Leur longueur de frottement, en cours d'accouplement ou de désaccouplement des éléments mâle et femelle du coupe-circuit, est avantageusement limitée.

Selon des aspects avantageux mais non obligatoires de l'invention, un tel coupe-circuit peut incorporer une ou plusieurs des caractéristiques suivantes, prises selon toutes combinaisons techniquement admissibles :

- Un rapport entre la première distance longitudinale et la deuxième distance longitudinale est supérieur ou égal à 1,5, de préférence à 1,75.
- Le corps femelle comprend au moins un premier évent, qui traverse radialement le corps femelle et qui relie fluidiquement le volume interne en avant du deuxième passage radial et l'extérieur du coupe-circuit, et au moins un deuxième évent qui traverse radialement le corps femelle et qui relie fluidiquement le volume interne du corps femelle, en arrière du deuxième passage radial, et l'extérieur du coupe-circuit, alors que, en configuration accouplée des éléments mâle et femelle et dans la position intermédiaire d'accouplement, les premier et deuxième passages radiaux sont isolés des premier et deuxième évents respectivement par les joints d'étanchéité proximal et distal.

- Lors du désaccouplement des éléments mâle et femelle depuis la configuration accouplée, le joint d'étanchéité distal est en regard radial du deuxième passage radial lorsque le joint d'étanchéité proximal parvient en regard radial du premier évent.

- Le premier évent et le deuxième passage débouchent chacun sur une surface radiale interne du corps femelle au niveau de poches ménagées en creux, localement autour de l'axe d'emmanchement, à partir de cette surface radiale interne.

- Le premier évent comprend une portion cylindrique inclinée par rapport à l'axe d'emmanchement et dont une extrémité arrière débouche sur une surface radiale externe du corps femelle et est disposée en arrière d'une extrémité avant de la portion cylindrique.

- Le coupe-circuit comprend plusieurs organes de verrouillage, chaque organe de verrouillage est une bille mobile dans un logement de verrouillage qui traverse radialement le corps femelle, l'élément femelle comprenant une bague de verrouillage qui est montée coulissante autour du corps femelle et qui entoure les organes de verrouillage, la bague de verrouillage étant rappelée élastiquement vers l'arrière, la bague de verrouillage étant en contact sur l'arrière, en configuration accouplée des éléments mâle et femelle, avec les billes par une surface interne de recouvrement inclinée par rapport à l'axe d'emmanchement et divergeant vers l'arrière du corps femelle.

- L'organe de verrouillage est un ressort de verrouillage logé dans un logement de verrouillage formé par une gorge périphérique interne du corps femelle et le ressort de verrouillage est configuré pour se déformer élastiquement entre sa première position de verrouillage et sa deuxième position de libération.

- Chaque deuxième passage radial est délimité longitudinalement par une première partie et par une deuxième partie du corps femelle, distincte de la première partie, la deuxième partie et la première partie étant solidarisées en butée longitudinale l'une contre l'autre, et, en configuration accouplée et dans la configuration intermédiaire d'accouplement, le joint d'étanchéité proximal coopère radialement avec une surface radiale interne appartenant à la première partie et le joint d'étanchéité distal coopère radialement avec une surface radiale interne appartenant à la deuxième partie.

- Chaque premier passage radial et chaque deuxième passage radial est à section allongée, avec une dimension maximale parallèle à l'axe d'emmanchement.

- La première soupape comprend une tige proximale coulissante dans un logement du corps mâle entre la position avancée de fermeture et la position reculée d'ouverture avec interposition radiale d'un deuxième joint d'étanchéité de tige, le premier joint d'étanchéité de tige est monté dans une gorge périphérique interne du corps mâle, alors que le deuxième joint d'étanchéité de tige est logé dans une gorge périphérique externe de la tige proximale et un rapport entre, d'une part, un diamètre de la tige proximale et, d'autre part, un diamètre de la tige distale est compris entre 0,95 et 1.

- Le logement du corps mâle où est reçue la tige proximale est formé dans une partie intermédiaire du corps mâle montée en contact longitudinal étanche avec une partie proximale du corps mâle, configurée pour être raccordée à un tronçon de canalisation de fluide sous pression, et en contact longitudinal étanche avec une partie distale du corps mâle qui porte les joints d'étanchéité proximal et distal.

- En configuration accouplée des éléments mâle et femelle, un diamètre d'une surface radiale interne du corps femelle avec laquelle coopère radialement le joint d'étanchéité proximal est égal à un diamètre d'une surface radiale interne du corps femelle avec laquelle coopère radialement le joint d'étanchéité distal et un diamètre d'une surface périphérique externe du corps mâle avec laquelle coopère radialement le joint d'étanchéité proximal est égal à un diamètre d'une surface périphérique externe du corps mâle avec laquelle coopère radialement le joint d'étanchéité distal.

- La surface d'appui configurée pour entrer en contact avec la première soupape est formée sur le corps femelle.

- La deuxième soupape comprend une tige distale qui est montée coulissante de façon étanche dans un logement traversant du corps femelle, le corps mâle forme une surface d'appui configurée pour entrer en contact avec la deuxième soupape et la déplacer, lors de l'emmanchement des éléments mâle et femelle, d'une position avancée de fermeture vers une position reculée d'ouverture. Une zone de contact entre la surface d'appui du corps mâle et la deuxième soupape et une zone de contact entre la surface d'appui du corps femelle et la première soupape sont décalées radialement l'une de l'autre.

Selon un deuxième aspect, l'invention concerne une installation de manutention de fluide sous pression comprenant une source de fluide sous pression et une première partie d'un raccord destinée à être accouplée à une deuxième partie de raccord reliée à un volume de stockage ou d'utilisation du fluide, la première partie du raccord étant reliée fluidiquement à la source par une canalisation, caractérisée en ce qu'un coupe-circuit selon tel que mentionné ci-dessus est relié fluidiquement à la source par un premier tronçon de la canalisation et à la première partie du raccord par un deuxième tronçon de la canalisation.

Cette installation est plus facile à manipuler que celles de l'art antérieur, du fait de la compacité du coupe-circuit, et sa fiabilité est améliorée.

L'invention sera mieux comprise et d'autres avantages de celle-ci apparaitront plus clairement à la lumière de la description qui va suivre de quatre modes de réalisation d'un coupe-circuit et d'une installation conformes à son principe, donnée à titre d'exemple et faite en référence aux dessins annexés dans lesquels :

[Fig.1] La figure 1 est une représentation schématique de principe d'une installation de manipulation de fluide sous pression qui comprend, entre autres, un coupe-circuit conforme à un premier mode de réalisation de l'invention dont les éléments mâle et femelle sont représentés en configuration désaccouplée, en coupe longitudinale ;

[Fig.2] La figure 2 représente, sur un insert A) une vue à plus grande échelle du détail II à la figure 1 et sur un insert B) une coupe partielle de principe selon la ligne B-B sur l'insert A) ;

[Fig.3] La figure 3 est une vue en perspective éclatée du coupe-circuit des figures 1 et 2 ;

[Fig.4] La figure 4 représente, sur un insert A), une coupe longitudinale partielle des éléments mâle et femelle du coupe-circuit des figures 1 à 3 dans une première position intermédiaire d'accouplement, sur un insert B) une coupe selon la ligne B-B sur l'insert A, sur un insert C) une coupe selon la ligne C-C sur l'insert A et, sur un insert D) une vue à plus grande échelle du détail D sur l'insert C ;

[Fig.5] La figure 5 représente les éléments mâle et femelle du coupe-circuit, en coupe longitudinale, dans une deuxième position intermédiaire d'accouplement sur l'insert A) et dans une troisième position intermédiaire d'accouplement sur l'insert B) ;

[Fig.6] La figure 6 représente les éléments mâle et femelle du coupe-circuit, en coupe longitudinale et en configuration accouplée, pour l'insert A) dans le même plan de coupe que les figures 1 et 5 et, pour l'insert B), dans un plan perpendiculaire représenté par la ligne B-B sur l'insert A) ;

[Fig.7] La figure 7 est une coupe longitudinale de principe d'un coupe-circuit conforme à un deuxième mode de réalisation, dans une première position intermédiaire d'accouplement de ses éléments mâle et femelle ;

[Fig.8] La figure 8 représente, sur l'insert A), une coupe longitudinale du coupe-circuit de la figure 7 dans une deuxième position intermédiaire d'accouplement et, sur l'insert B), une coupe transversale selon la ligne B-B sur l'insert A) ;

[Fig.9] La figure 9 représente, sur l'insert A), une coupe longitudinale du coupe-circuit des figures 7 et 8 en configuration accouplée et, sur les inserts B) et C), des coupes transversales respectivement selon les lignes B-B et C-C sur l'insert A) ;

[Fig.10] La figure 10 représente, sur deux inserts A) et B) et en coupe longitudinale, un coupe-circuit conforme à un troisième mode de réalisation de l'invention, respectivement en position intermédiaire d'accouplement et en configuration accouplée ;

[Fig.11] La figure 11 représente, respectivement sur des inserts A), B) et C) un coupe-circuit conforme à un quatrième mode de réalisation de l'invention respectivement, en coupe longitudinale dans une position intermédiaire d'accouplement, en configuration accouplée et en perspective partielle éclatée.

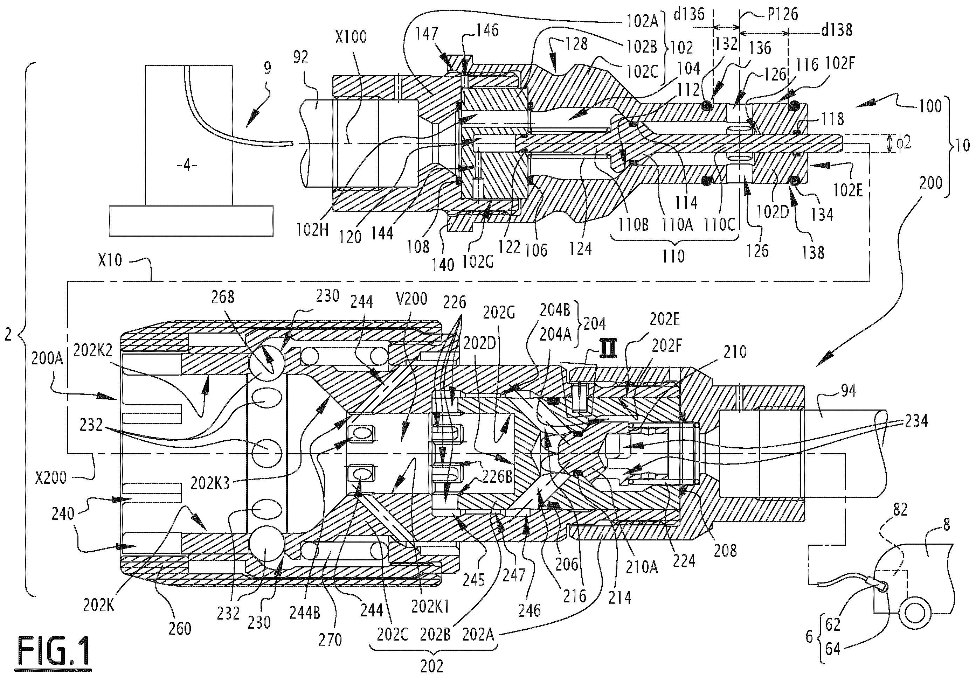

Une installation 2 de manutention de fluide sous pression est représentée à la figure 1. Elle comprend une borne 4 qui forme une source de fluide sous pression, ce fluide étant, dans l'exemple, de l'hydrogène liquide sous une pression comprise entre 300 et 900 bars. L'installation 2 comprend également un pistolet 62 qui constitue une première partie d'un raccord 6 dont la deuxième partie complémentaire 64 est montée sur un véhicule automobile 8 qui comprend un réservoir embarqué 82 de stockage du fluide sous pression. La deuxième partie 64 peut être accouplée au pistolet 62 lorsqu'il convient de remplir le réservoir 82 avec du fluide sous pression.

Une canalisation 9 relie la borne 4 au pistolet 62. Un coupe-circuit de sécurité 10 conforme à l'invention est intercalé le long de la canalisation 9 et divise celle-ci entre un premier tronçon amont 92, qui s'étend entre la borne 4 et le coupe-circuit 10, et un deuxième tronçon aval 94, qui s'étend entre ce coupe-circuit 10 et le pistolet 62.

Pour la clarté du dessin, les éléments 4, 6 et 9 de l'installation 2 sont représentés uniquement à la figure 1.

Le coupe-circuit 10 comprend un élément mâle 100 et un élément femelle 200.

Pour chacun des éléments mâle 100 et femelle 200, on définit l'avant de cet élément comme étant le côté de cet élément orienté vers l'autre élément du coupe-circuit 10 lorsque ces éléments mâle et femelle sont alignés et prêts à être emmanchés l'un dans l'autre. On définit l'arrière d'un des éléments du coupe-circuit comme étant le côté opposé à son côté avant, orienté vers le tronçon 92 ou 94 de la conduite 9 auquel il est raccordé.

Pour chacun des éléments mâle et femelle 100 et 200, l'adjectif « proximal » qualifie une partie, une surface ou un volume situé plus près de l'arrière de cet élément qu'une partie, une surface ou un volume qualifié de distal. À l'inverse, l'adjectif « distal » qualifie une partie, une surface ou un volume situé plus près de l'avant d'un des éléments mâle et femelle 100 et 200 qu'une partie, une surface ou un volume qualifié de proximal.

Sur les figures 1, 4 et 5, le côté avant ou distal de l'élément 100 est orienté vers la droite, alors que son côté arrière ou proximal est orienté vers la gauche, que le côté avant ou distal de l'élément femelle 200 est orienté vers la gauche de ces figures et que son côté arrière ou proximal est orienté vers la droite.

Dans ce qui suit, les adjectifs « axial » et « radial » sont utilisés pour qualifier une position ou l'orientation d'une surface en fonction d'un axe longitudinal de la pièce ou du sous-ensemble concerné. Une surface est axiale lorsqu'elle est perpendiculaire à un axe longitudinal et radiale lorsqu'elle est perpendiculaire à toute normale à un axe longitudinal. En particulier, une surface radiale est une surface périphérique à base circulaire qui est centrée sur un axe longitudinal et qui s'étend autour de cet axe.

Les adjectifs « interne » et « externe » sont utilisés pour qualifier l'orientation d'une surface en fonction d'un axe longitudinal central de la pièce ou du sous-ensemble concerné. Une surface est interne lorsqu'elle est tournée vers l'axe longitudinal central et externe lorsqu'elle est tournée à l'opposé de l'axe longitudinal central.

Le coupe-circuit 10 est destiné au raccordement amovible des tronçons 92 et 94 auxquels sont raccordés l'élément mâle 100 et l'élément femelle 200.

L'élément mâle 100 s'étend le long d'un axe longitudinal X100 et comprend un corps mâle tubulaire 102 centré sur l'axe longitudinal X100 et composé d'une partie proximale 102A, d'une partie intermédiaire 102B et d'une partie distale 102C.

Le corps mâle 102 est traversé par un premier conduit interne 104 de circulation de fluide sous pression, qui est relié au tronçon amont 92 en configuration d'utilisation du coupe-circuit 10. Le corps mâle 102 comprend le premier conduit interne 104.

Les parties proximale et distale 102A et 102C sont vissées l'une avec l'autre au moyen d'un filetage ménagé sur une surface radiale externe de la partie proximale 102A et d'un taraudage ménagé sur une surface radiale interne de la partie distale 102C. Les parties proximale et distale 102A et 102C prennent en sandwich, selon une direction parallèle à l'axe longitudinal X100, la partie intermédiaire 102B.

La partie distale 102C est directement en contact, par son côté arrière, contre la partie intermédiaire 102B. Un joint d'étanchéité frontal 106, interposé entre une surface arrière axiale de la partie distale 102C et une surface avant axiale de la partie intermédiaire 102B, assure l'étanchéité du conduit interne 104 au niveau de l'interface entre les parties distale 102C et intermédiaire 102B.

La partie proximale 102A est directement en contact, par son côté avant, contre la partie intermédiaire 102B. Un joint frontal 108, interposé entre une surface avant axiale de la partie proximale 102A et une surface arrière axiale de la partie intermédiaire 102B, assure l'étanchéité du conduit interne 104 au niveau de l'interface entre les parties proximale 102A et intermédiaire 102B.

Les joints frontaux 106 et 108 ne sont pas soumis à un effort qui tendrait à les chasser de leurs logements respectifs sous l'effet de la pression régnant dans le corps mâle 102.

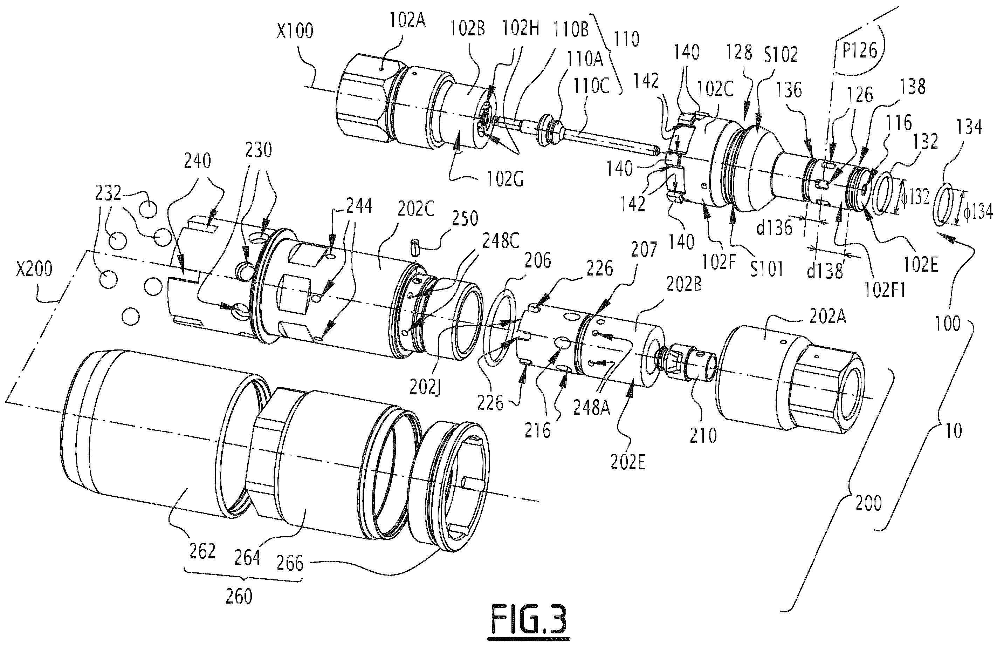

Trois conduits de passage traversent la partie intermédiaire 102B de part en part selon l'axe longitudinal X100 et font partie du conduit interne 104. Un seul de des conduits de passage est visible à la figure 1, avec la référence 102H. Les trois conduits en question sont visibles à la figure 3.

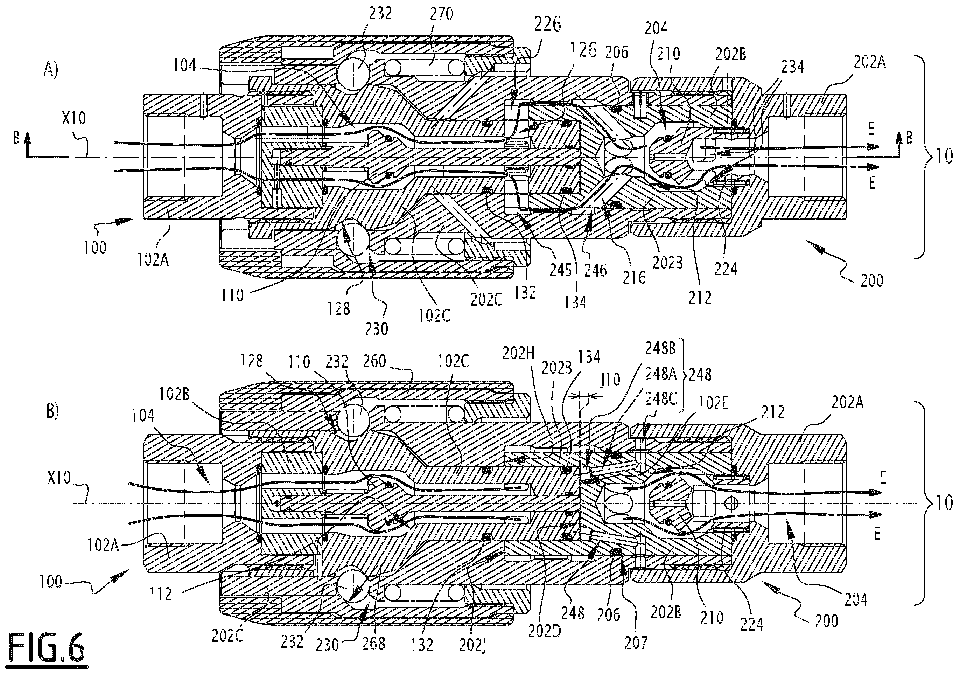

Une soupape 110 de l'élément mâle 100 est mobile, dans le conduit interne 104, entre une position avancée de fermeture de ce conduit, qui est représentée notamment à la figure 1 et où elle est en butée avant contre un siège 112 formé sur la partie distale 102C du corps mâle, et une position reculée d'ouverture, représentée notamment à la figure 6, où elle est décalée de son siège 112 et ouvre le conduit interne 104 de l'élément mâle 100.

Un joint d'étanchéité 114 est monté sur la soupape 110 et coopère radialement avec la partie distale 102C du corps mâle 102 en position avancée de fermeture de cette soupape, pour assurer l'étanchéité de la fermeture du conduit interne 104. Ce joint 114 n'est pas en contact avec le corps mâle 102 en position reculée d'ouverture de la soupape 110.

La soupape 110 est monobloc et comprend une tête de soupape 110A, qui porte le joint 114 et qui est en appui contre le siège 112, c'est-à-dire en butée longitudinale avant ou vers l'avant, en position avancée de fermeture de la soupape. La tête de soupape 110A constitue une portion d'obturation sélective du conduit interne 104. La soupape 110 comprend également une tige proximale 110B et une tige distale 110C, formées d'une seule pièce avec la tête de soupape 110A.

On note 102D l'extrémité distale du corps mâle 102, qui est formée par l'extrémité distale de la partie distale 102C. La tige distale 110C traverse l'extrémité distale 102D en étant reçue dans un logement traversant 116 qui s'étend à travers l'extrémité distale 102D, le long de l'axe longitudinal X100. Un premier joint d'étanchéité de tige 118 est monté dans une gorge périphérique interne de l'extrémité distale 102D qui débouche dans le logement traversant 116. Ce premier joint d'étanchéité de tige 118 coopère radialement avec l'extrémité distale 102D et avec la tige distale 110C et glisse le long d'une surface radiale externe de la tige distale 110 C lorsque celle-ci se déplace axialement par rapport au corps mâle 102.

La tige proximale 110B est engagée dans un logement 120 centré sur l'axe longitudinal X100 et ménagé dans la partie intermédiaire 102B. Un deuxième joint d'étanchéité de tige 122 est monté dans une gorge périphérique externe de la tige proximale 110B et coopère radialement avec cette tige proximale 110B et une surface radiale interne délimitant radialement le logement 120. Le deuxième joint d'étanchéité de tige 122 glisse le long de la surface radiale interne délimitant radialement le logement 120 lorsque la tige proximale se déplace axialement par rapport au corps mâle 102.

Un ressort 124 est interposé entre la partie intermédiaire 102B et la tête 110A, autour de la tige proximale 110B, à l'intérieur du conduit interne 104. Le ressort 124 exerce par défaut un effort élastique de poussée de la soupape 110 vers sa position avancée de fermeture.

On note Φ1 un diamètre de la surface radiale externe de la tige proximale 110B à partir de laquelle la gorge périphérique externe logeant le deuxième joint d'étanchéité de tige 122 est formée. On note Φ2 un diamètre de la surface radiale externe de la tige distale 110C qui définit un diamètre d'étanchéité entre le premier joint d'étanchéité de tige 118 et la surface périphérique de la tige distale 110C. On note Φ1' un diamètre du fond de la gorge périphérique externe du deuxième joint d'étanchéité 122 qui définit un diamètre d'étanchéité entre le deuxième joint d'étanchéité de tige 122 et la tige proximale 110B. Les diamètres Φ1 et Φ2 sont sensiblement égaux. En pratique, le rapport Φ1/Φ2 est compris entre 0,95 et 1, tout en étant de préférence strictement inférieur à 1. Ainsi, avec un premier joint d'étanchéité de tige 118 monté dans un alésage et un deuxième joint d'étanchéité de tige 100 monté sur une tige, le diamètre d'étanchéité Φ1' du joint d'étanchéité de tige 122 avec la soupape 110 est strictement inférieur au diamètre d'étanchéité Φ2, ce qui a pour effet que la pression du fluide contenu dans le conduit interne 104, n'exerce pas sur cette soupape un effort d'ouverture en configuration accouplée. En effet, lorsque le diamètre Φ1' est strictement inférieur au diamètre Φ2, la pression du fluide contenu dans le conduit interne tend à ramener la soupape 110 vers sa position avancée de fermeture. Cette différence entre les diamètres Φ1' et Φ2 participe à la sécurité de la fermeture de la soupape 110, et donc du déverrouillage d'urgence puisque le ressort 124 n'a pas à être surdimensionné pour garantir la fermeture de la soupape 110.

Dans la configuration désaccouplée représentée à la figure 1, la tige distale 110C dépasse vers l'avant de l'élément mâle 100 par rapport à une surface axiale avant d'extrémité 102E de l'extrémité distale 102D, donc du corps mâle 102.

La partie distale 102C du corps mâle 102 forme plusieurs premiers passages radiaux 126, dans l'exemple six premiers passages radiaux, qui sont régulièrement répartis autour de l'axe longitudinal X100 et qui présentent, de préférence, une section allongée parallèlement à cet axe, cette section allongée étant visible sur la figure 3. Le corps mâle 102 comprend les premiers passages radiaux 126. Avantageusement, une longueur de chaque premier passage radial 126, qui constitue la dimension maximale de ce passage radial et qui est mesurée parallèlement à l'axe longitudinal X100, est strictement supérieure à une largeur de ce premier passage radial qui est mesurée selon une direction ortho-radiale à l'axe longitudinal X100. Chaque passage radial 126 est un volume cylindrique dont la base est à section allongée et dont l'axe du cylindre est radial à l'axe longitudinal X100.

Le nombre de passages radiaux 126 peut être différent de six. En pratique, ce nombre est choisi supérieur ou égal à un, de préférence entre un et dix, en fonction des dimensions respectives de la partie distale 102C et des passages radiaux 126.

Chaque passage radial 126 relie le conduit interne 104 et une surface périphérique externe 102F de la partie distale 102C, dans une portion avant 102F1 de cette surface 102F qui est à section circulaire et à génératrice rectiligne.

La partie distale 102C forme également une encoche externe de verrouillage 128, autrement dit une gorge périphérique externe de verrouillage, qui est ménagée sur la surface périphérique externe 102F, en étant décalée axialement vers l'arrière par rapport aux premiers passages radiaux 126. Le corps mâle 102 comprend l'encoche externe de verrouillage 128.

La portion avant 102F1 de la surface périphérique externe 102F porte deux joints d'étanchéité toriques, disposés de part et d'autre des premiers passages radiaux 126, le long de l'axe longitudinal X100, à savoir un joint d'étanchéité proximal 132 et un joint d'étanchéité distal 134. Chacun des joints d'étanchéité proximal 132 et distal 134 est respectivement reçu dans une gorge périphérique externe de la surface périphérique externe 102F, à savoir respectivement une gorge périphérique externe proximale 136 et une gorge périphérique externe distale 138.

Avantageusement, la gorge périphérique externe proximale 136 et la gorge périphérique externe distale 138 sont identiques.

On note P126 un plan radial médian des premiers passages radiaux 126.

On note d136 une distance mesurée entre le plan radial médian P126 et le bord de la gorge 136 le plus proche des premiers passages radiaux 126. On note d138 une distance axiale mesurée entre le plan radial médian P126 et le bord de la gorge 138 le plus proche des premiers passages radiaux 126. Les distances axiales d136 et d138 sont mesurées parallèlement à l'axe longitudinal X100.

La distance d138 est strictement supérieure à la distance d136.

En d'autres termes, le joint d'étanchéité proximal 132 est plus proche des premiers passages radiaux 126 que le joint d'étanchéité distal 134.

Avantageusement, la distance d138 est au moins une fois et demi supérieure à la distance d136, de préférence 1,75 fois supérieure. En d'autres termes, un rapport d138/ d136 est supérieur ou égal à 1,5, de préférence à 1,75.

On a les relations :

$$d138/ d136 \geq 1,5 \qquad \text{(équation 1)}$$

de préférence

$$d138/\, d136 \geq 1{,}75 \qquad \text{(équation 1bis)}$$

Avantageusement, les joints d'étanchéité proximal 132 et distal 134 sont identiques.

On note respectivement Ø132 le diamètre intérieur du joint d'étanchéité 132 et Ø134 le diamètre intérieur du joint d'étanchéité 134. On note respectivement $\varphi$132 le diamètre de tore du joint d'étanchéité 132 et $\varphi$134 le diamètre de tore du joint d'étanchéité 134.

Avantageusement, pour chaque joint, son diamètre de tore est très inférieur à son diamètre intérieur, de préférence au moins 5 fois inférieur au diamètre intérieur, de préférence encore au moins 10 fois inférieur au diamètre intérieur.

On a les relations :

$$\text{Ø}132 \geq 5\ \text{X}\ \varphi132 \qquad \text{(équation 2)}$$

de préférence

$$\text{Ø}132 \geq 10\ \text{X}\ \varphi132 \qquad \text{(équation 2bis)}$$

$$\text{Ø}134 \geq 5\ \text{X}\ \varphi134, \qquad \text{(équation 3)}$$

de préférence

$$\text{Ø}134 \geq 10\ \text{X}\ \varphi134 \qquad \text{(équation 3bis)}$$

L'encoche externe de verrouillage 128 est délimitée longitudinalement par une surface inclinée distale S128 située du côté avant de cette encoche et une surface inclinée proximale S'128 située du côté arrière de l'encoche de verrouillage.

La surface inclinée distale S128 se prolonge, en direction de l'extrémité distale 102D du corps mâle 102, par une surface radiale S101 parallèle à l'axe longitudinal X100 puis une surface externe S102, inclinée par rapport à l'axe longitudinal X100, la surface inclinée externe S102 étant la plus proche de l'extrémité distale 102D parmi ces deux surfaces S102 et S128.

En pratique, les surfaces S128, S'128 et S102 sont avantageusement en forme de tronc de cône, alors que la surface S101 est avantageusement en forme de cylindre à génératrice droite et à base circulaire.

La surface inclinée distale S128 diverge vers l'avant, c'est-à-dire en se rapprochant de l'extrémité distale 102D le long de l'axe longitudinal X100, alors que les surfaces inclinées proximale S'128 et externe S102 convergent vers l'avant, en se rapprochant de l'extrémité distale 102D le long de l'axe longitudinal X100.

On note $\alpha$ un angle d'inclinaison de la surface inclinée proximale S128 par rapport à l'axe longitudinal X100. Avantageusement, l'angle $\alpha$ est compris entre 40 et 50°, de préférence égal à 45° environ.

On note ß un angle d'inclinaison de la surface inclinée externe S102 par rapport à l'axe longitudinal X100. Avantageusement, l'angle ß est compris entre 12 et 20°, de préférence égal à environ 15°.

Le corps mâle 102 comprend également des dents radiales externes 140 qui s'étendent à partir de la surface périphérique externe 102F, au voisinage d'une extrémité arrière de la partie distale 102C. Chaque dent 140 est délimitée, selon une direction ortho-radiale à l'axe longitudinal X100, par deux faces 142 qui sont parallèles à un plan longitudinal passant par le milieu de la dent 140 en question, à égale distance de ces faces et qui contient l'axe longitudinal X100. Les dents radiales externes 140 sont régulièrement réparties autour de l'axe longitudinal X100, au niveau de l'extrémité arrière de la partie distale 102C et disposées angulairement de façon précise et prédéterminée par rapport aux premiers passages radiaux 126.

Dans l'exemple des figures, le nombre de dents 140 est égal à six. En variante, il peut être différent, tout en restant supérieur ou égal à 1.

Le logement 120 de la partie intermédiaire 102B du corps mâle 102 est relié à l'extérieur de l'élément mâle 100 à l'arrière de la tige proximale 110B, dans toutes les positions de la soupape 110 vis-à-vis du corps mâle 100, notamment lorsque cette soupape est en position avancée de fermeture et en position reculée d'ouverture. Pour ce faire, un évent 144 est ménagé dans la partie intermédiaire 102B et s'étend, radialement à l'axe longitudinal X100, entre le logement 120 et une surface périphérique externe 102G de la partie intermédiaire 102B. Cet évent 144 communique, à travers un trou radial 146 ménagé à travers la partie proximale 102A puis à travers un espace radial 147 ménagé entre les parties proximale et distale 102A et 102C, qui n'est pas étanche. De l'air provenant du logement 120 peut ainsi s'échapper vers l'extérieur de l'élément mâle 100 à travers l'évent 144, le trou radial 146 et l'espace radial. L'évent 144 est isolé du conduit interne 104 par les joints frontaux 106 et 108 et par le deuxième joint d'étanchéité de tige 122, de sorte que le fluide traversant le coupe circuit en configuration accouplée des éléments mâle 100 et femelle 200 ne risque pas de s'échapper hors du coupe-circuit par l'évent 144.

L'élément femelle 200 s'étend le long d'un axe longitudinal X200 et comprend un corps femelle tubulaire 202 centré sur l'axe longitudinal X200 et composé d'une partie proximale 202A, d'une partie intermédiaire 202B et d'une partie distale 202C.

Le corps femelle 202 est traversé par un deuxième conduit interne 204 de circulation de fluide sous pression qui est relié au tronçon aval 94 en configuration d'utilisation du coupe-circuit 10. Le corps femelle 202 comprend le deuxième conduit interne 204.

En cours d'accouplement des éléments mâle et femelle 100 et 200 et en configuration emmanchée de ces éléments, les axes longitudinaux X100 et X200 sont confondus et alignés sur un axe d'emmanchement X10 du coupe-circuit 10.

La partie intermédiaire 202B et la partie distale 202C délimitent ensemble un volume interne V200 de l'élément femelle 200 configuré pour recevoir une partie de l'élément mâle 100 en cours d'accouplement et en configuration accouplée des éléments mâle et femelle 100 et 200.

La partie intermédiaire 202B forme une surface d'appui 202D qui délimite longitudinalement, sur l'arrière, le volume interne V200. La surface d'appui 202D est une surface interne, axiale par rapport à l'axe longitudinal X200.

Les parties proximale et distale 202A et 202C sont vissées l'une avec l'autre, au moyen d'un filetage ménagé sur une surface radiale externe de la partie distale 202C et d'un taraudage ménagé sur une surface radiale interne de la partie proximale 202A. Les parties proximales et distales 202A et 202C prennent en sandwich, selon une direction parallèle à l'axe longitudinal X200, la partie intermédiaire 202B.

Un joint d'étanchéité radial 206 est disposé radialement entre la partie intermédiaire 202B et la partie distale 202C. Le joint 206 est logé dans une gorge périphérique externe 207 ménagée sur une surface radiale externe 202E de la partie intermédiaire 202B.

Un joint d'étanchéité frontal 208 est interposé entre la partie intermédiaire 202B et la partie proximale 202A, au niveau d'une zone de contact où a lieu un appui surfacique axial entre les parties 202A et 202B.

La surface radiale externe 202E coopère à jeu réduit avec une surface radiale interne 202F de la partie distale 202C, sur plus d'un tiers de la longueur de la partie intermédiaire 202B mesurée parallèlement à l'axe longitudinal X200. Cette coopération à jeu réduit des surfaces 202E et 202F garantit une bonne co-axialité des parties intermédiaire et distale 202B et 202C du corps femelle 202.

Le conduit interne 204 comprend une portion arrière 204A centrée sur l'axe longitudinal X200 et dans laquelle est logée une soupape monobloc 210 de l'élément femelle 200.

La soupape 210 est mobile, dans la partie arrière 204A du conduit interne 204, entre une position avancée de fermeture de ce conduit, qui est représentée notamment à la figure 1 et où une tête 210A de cette soupape est en butée avant contre un siège 212 formé sur la partie intermédiaire 202B du corps femelle, et une position reculée d'ouverture, représentée notamment à la figure 6, où elle est décalée de son siège 212 et ouvre le conduit interne 204 de l'élément femelle 200. La tête de soupape 210A constitue une portion d'obturation sélective du conduit interne 204.

Un joint d'étanchéité 214 est monté sur la soupape 210 et coopère radialement avec la partie intermédiaire 202B du corps femelle en position avancée de fermeture de cette soupape. Ce joint n'est pas en contact avec le corps femelle 202 en position reculée d'ouverture de la soupape 210.

Un ressort 224 interposé entre la partie proximale 202A et la soupape 210 repousse par défaut la soupape 210 vers sa position avancée de fermeture, en appui contre le siège 212.

Le conduit interne 204 comprend également une partie intermédiaire 204B disposée radialement à l'intérieur de la partie distale 202C, autour de la partie intermédiaire 202B.

Des passages inclinés 216 traversent la partie intermédiaire 202B et s'étendent de la partie intermédiaire 204B du conduit interne 204, vers la partie arrière 204A de ce conduit interne, à l'avant du siège 212. En pratique, les passages inclinés 216 font partie du conduit interne 204 et relient ses parties intermédiaire 204B et arrière 204A.

Les passages inclinés 216 sont, par exemple, au nombre de six et ont tous la même inclinaison par rapport à l'axe longitudinal X200. Les passages inclinés 216 divergent en direction de l'avant de l'élément femelle 200. On note Y l'angle d'inclinaison d'un passage incliné 216 par rapport à l'axe longitudinal X200. La valeur de l'angle Y est avantageusement comprise entre 40° et 50°, de préférence de l'ordre de 45°.

En variante non-représentée de l'invention, le nombre de passages inclinés 216 est différent de six, en étant supérieur ou égal à un.

Des deuxièmes passages radiaux 226 relient la partie intermédiaire 204B du conduit interne 204 et une première surface radiale interne 202G de la partie intermédiaire 202B qui participe à la délimitation radiale du volume V200. Ainsi, les deuxièmes passages radiaux 226 relient la partie intermédiaire 204B du conduit interne 204 au volume V200, en traversant radialement la partie intermédiaire 202B du corps femelle 202.

Les deuxièmes passages radiaux 226 sont régulièrement répartis autour de l'axe longitudinal X200. Dans l'exemple des figures, ils sont au nombre de six.

En variante, le nombre de passages radiaux 226 peut être différent, pour autant qu'il est supérieur ou égal à 1, les deuxièmes passages radiaux étant toutefois de préférence régulièrement répartis autour de l'axe X200, quel que soit leur nombre s'il est supérieur ou égal à 2.

Avantageusement, le nombre de deuxièmes passages radiaux 226 est égal au nombre de premiers passages radiaux 126.

Les deuxièmes passages radiaux 226 sont délimités par des encoches ménagées sur un bord avant 202J de la partie intermédiaire 202B et sont délimitées, sur l'avant, par une surface axiale arrière 202H de la partie distale 202C. Sur l'arrière et selon une direction circonférentielle par rapport à l'axe longitudinal X200, les deuxièmes passages radiaux 226 sont délimités par la matière de la partie intermédiaire 202B. Le bord avant 202J de la partie intermédiaire 202B est maintenu en contact surfacique avec la surface axiale arrière 202H de la partie distale 202C du fait de la prise en sandwich de la partie intermédiaire 202B entre les parties proximale et distale 202A et 202C du corps femelle 202. Cette réalisation des deuxièmes passages radiaux 226 confère une bonne compacité axiale au coupe-circuit de l'invention.

Les deuxièmes passages radiaux 226 ont chacun une section, prise dans un plan ortho-radial à l'axe longitudinal X200, sensiblement identique à une section des premiers passages radiaux 126 prise dans un plan ortho-radial à l'axe longitudinal X100. Ainsi, les deuxièmes passages radiaux 226 sont à section allongée, en ce sens que leur longueur, mesurée parallèlement à l'axe longitudinal X200, est strictement supérieure à leur largeur, mesurée selon une direction ortho-radiale à l'axe X200. La forme allongée des premiers et deuxièmes passages radiaux 126 et 226 permet d'obtenir un débit maximum de fluide à l'intérieur du coupe-circuit 10, en configuration accouplée des éléments mâle et femelle 100 et 200, alors que sa compacité radiale est améliorée et que les pertes de charge du coupe-circuit 10 sur l'écoulement de fluide sous pression sont minimisées en configuration accouplée des éléments mâle 100 et femelle 200.

Des logements de verrouillage 230 à section cylindrique de base circulaire traversent radialement la partie distale 202C, en avant des deuxièmes passages radiaux 226. Ces logements de verrouillage 230 débouchent au niveau d'une surface interne 202K de la partie distale 202C qui délimite également radialement le volume interne de réception V200. Plus précisément, les logements de verrouillage 230 débouchent au niveau d'une deuxième surface radiale interne 202K2 de la partie distale 202C qui est une partie avant de la surface interne 202K. En pratique, le volume V200 est délimité, radialement à l'axe X200, par la première surface radiale 202G au niveau axial de la partie intermédiaire 202B et par la surface interne 202K au niveau axial de la partie distale 202C. Bien que formées sur des parties différentes 202B et 202C du corps 202, les surfaces 202G et 202K forment ensemble la surface périphérique interne de ce corps femelle.

La première surface radiale 202G est de diamètre constant sur sa longueur axiale, alors qu'un diamètre de la surface interne 202K augmente en se rapprochant de l'embouchure 200A de l'élément femelle 200, à travers laquelle le corps mâle 102 pénètre dans le corps femelle 202 en cours d'emmanchement des éléments mâle et femelle 100 et 200. La surface interne 202K comprend ainsi une troisième surface radiale interne 202K1 adjacente, sur l'avant, à la première surface radiale interne 202G le long de l'axe longitudinal X200 et de diamètre constant et égal à celui de la première surface radiale interne 202G. La surface interne 202K comprend également la deuxième surface radiale interne 202K2, qui délimite radialement l'embouchure 200A et de diamètre constant et strictement supérieur à celui de la première surface radiale interne 202G. Une portion tronconique 202K3 de la surface interne 202K relie ses portions 202K1 et 202K2 et diverge en direction de l'embouchure 200A. En résumé, la surface interne 202K est formée de la réunion des surfaces 202K1, 202K2 et 202K3.

Chaque logement de verrouillage 230 reçoit une bille de verrouillage 232 et présente un diamètre resserré sur son côté radial interne, strictement inférieur au diamètre des billes 232, ce qui permet de retenir chaque bille 232 à l'intérieur d'un logement 230, sans qu'elle tombe complètement dans le volume interne de réception V200.

Chaque bille 232 constitue un organe de verrouillage et est mobile, à l'intérieur de son logement de verrouillage 230 entre :

- une première position radiale interne de verrouillage, dans laquelle la bille dépasse radialement dans le volume V200 de réception du corps mâle 102 et, si elle est engagée dans l'encoche externe de verrouillage 128 du corps mâle 102, s'oppose au retrait axial, hors de l'élément femelle 200, du corps mâle 102 emmanché dans le volume V200 et
- une deuxième position radiale externe de libération, dans laquelle le retrait axial du corps mâle 102 hors de l'élément femelle 200 est possible.

La géométrie des logements de verrouillage 230 et des billes de verrouillage 232 est telle que les billes sont mobiles, chacune dans son logement 230, uniquement selon une direction radiale à l'axe longitudinal X200.

Chaque deuxième passage radial 226 est formé par une partie principale 226A, cylindrique dont la base est à section oblongue et dont l'axe du cylindre A226 est radial à l'axe longitudinal X200, et une poche 226B ménagée en creux à partir de la surface radiale interne 202G. Les poches 226B sont régulièrement réparties autour de l'axe longitudinal X200. Une portion de la première surface radiale interne 202G s'étend, circonférentiellement à l'axe longitudinal X200, entre deux poches 226B. En d'autres termes, les poches 226B sont ménagées en creux, localement autour de l'axe longitudinal X200, à partir de cette première surface radiale interne 202G.

La géométrie externe de la tête 210A est identique à la géométrie de la tête 110A de la soupape 110 de l'élément mâle 100. En particulier, les surfaces tronconiques des têtes 110A et 210A en contact avec leur siège respectif 112, 212 en position de fermeture ont même inclinaison, leurs gorges dans lesquelles sont logés les joints d'étanchéité 114 et 214 sont de même géométrie radiale et axiale et les joints 114 et 214 sont avantageusement identiques.

La soupape 210 est traversée par des passages 234 qui permettent à un fluide traversant le coupe-circuit 10 de transiter entre la portion arrière 204A du conduit interne 204 et le tronçon aval 94 de la conduite 9. La soupape 210 fonctionne comme un clapet anti-retour. Elle est configurée pour se déplacer de sa position avancée de fermeture vers sa position reculée d'ouverture lorsque le fluide sous pression présent dans la partie intermédiaire 204B du conduit interne 204 exerce sur la tête 210A un effort axial dirigé vers l'arrière du corps femelle, au point de décoller la soupape 210 de son siège 212 et de libérer un passage pour le fluide sous pression qui s'écoule alors à travers le coupe-circuit, dans le sens des flèches d'écoulement E représentées à la figure 6.

Des encoches longitudinales 240 sont formées à l'extrémité avant de la partie distale 202C, avec une géométrie complémentaire à celle des dents radiales 140 du corps mâle 102.

Des premiers évents 244 sont formés dans la partie distale 202C du corps femelle 202 et relient fluidiquement le volume interne V200, en avant des deuxièmes passages radiaux 226, et l'extérieur de l'élément femelle 200. Les premiers évents 244 traversent radialement le corps femelle 202. Ces premiers évents 244 débouchent sur la surface interne 202K, au niveau de sa troisième surface radiale interne 202K1. Chaque évent 244 comprend un alésage 244A de forme cylindrique aligné sur un axe A244 et une poche 244B ménagée en creux à partir de la surface interne 202K. Les poches 244B sont régulièrement réparties autour de l'axe longitudinal X200. Une portion de la troisième surface radiale interne 202K1 s'étend, circonférentiellement à l'axe longitudinal X200, entre deux poches 244B. En d'autres termes, les poches 244B sont ménagées en creux, localement autour de l'axe longitudinal X200, à partir de cette troisième surface radiale interne 202K1.

Chaque axe A244 est incliné par rapport à l'axe longitudinal X200 et divergeant vers l'arrière du corps femelle 202. On note $\delta$ l'angle d'inclinaison d'un axe A244 par rapport à l'axe longitudinal X200. Avantageusement, l'angle $\delta$ est compris entre 40 et 50°, de préférence de l'ordre de 45°.

Avantageusement, une extrémité arrière de chaque portion cylindrique 244A débouche sur une surface radiale externe du corps femelle 202 et est disposée en arrière d'une extrémité avant de cette portion cylindrique 244A.

Avantageusement, les premiers évents 244 sont isolés du conduit interne 104 en configuration accouplée par le joint proximal 132.

L'inclinaison choisie pour les axes A244 empêche l'humidité externe à l'élément femelle 202, notamment des gouttelettes de liquide, de pénétrer dans le corps femelle 202, lorsque celui-ci est disposé en position verticale, avec sa partie distale 202C orientée vers le haut, ce qui est une position conventionnelle dans un coupe-circuit.

La surface radiale interne 202F de la partie distale 202C est pourvue d'une première gorge radiale interne avant 245 et d'une deuxième gorge radiale interne arrière 246. Les gorges 245 et 246 sont reliées par un volume périphérique 247. En configuration assemblée du corps femelle 202, la première gorge 245 est disposée radialement en regard des deuxièmes passages radiaux 226, alors que la deuxième gorge arrière 246 est disposée radialement en regard des portions les plus avant des passages inclinés 216. Ainsi, la première gorge 245 constitue un collecteur pour du fluide traversant les deuxièmes passages radiaux 226, selon une direction radiale et centrifuge par rapport à l'axe longitudinal X200, alors que la deuxième gorge arrière 246 constitue un distributeur de fluide vers passages inclinés 216 et que le volume périphérique 247 relie le collecteur et le distributeur précités.

Des deuxièmes évents 248 sont formés dans le corps femelle 202 et traversent radialement le corps femelle 202. Les deuxièmes évents 248 comprennent chacun un alésage coudé 248A, une poche 248B et un passage 248C. L'alésage coudé 248A et la poche 248B sont ménagés dans la partie intermédiaire 202B, alors que le passage 248C est ménagé dans la partie intermédiaire 202B et dans la partie distale 202C. Les poches 248B sont ménagées en creux dans la surface d'appui 202D. Les deuxièmes évents 248 débouchent sur cette surface d'appui. Les deuxièmes évents 248 relient fluidiquement le volume interne V200, en arrière des deuxièmes passages radiaux 226, avec l'extérieur de l'élément femelle 200. Les deuxièmes évents 248 débouchent, sur l'extérieur du corps femelle 202, dans un volume interne, délimité entre une surface radiale externe de la partie proximale 202C et une surface radiale interne de la partie proximale 202A, qui communique fluidiquement avec l'extérieur du corps femelle 202, les deuxièmes évents 248 étant isolés du conduit interne 104 en configuration accouplée, par le joint radial 206, par le joint frontal 208 et par le joint distal 134.

Une goupille d'indexage 250 s'étend radialement à l'axe longitudinal X200 et est interposée entre la partie intermédiaire 202B et la partie distale 202C du corps femelle 202. Cette goupille d'indexage 250 forme un obstacle à la rotation relative des parties intermédiaire 202B et distale 202C, ce qui permet d'indexer angulairement la partie intermédiaire 202B et la partie distale 202C autour de l'axe longitudinal X200 l'une par rapport à l'autre, ce qui permet

**EP 4 682 418 A1**

de constituer les deuxièmes évents 248, en alignant radialement leurs parties 248A et 248C. Cette indexation angulaire des parties 202B et 202C permet également d'orienter angulairement les deuxièmes passages radiaux 226 du corps femelle vis-à-vis des premiers passages radiaux 126, grâce à la coopération des dents 140 et des encoches longitudinales 240.

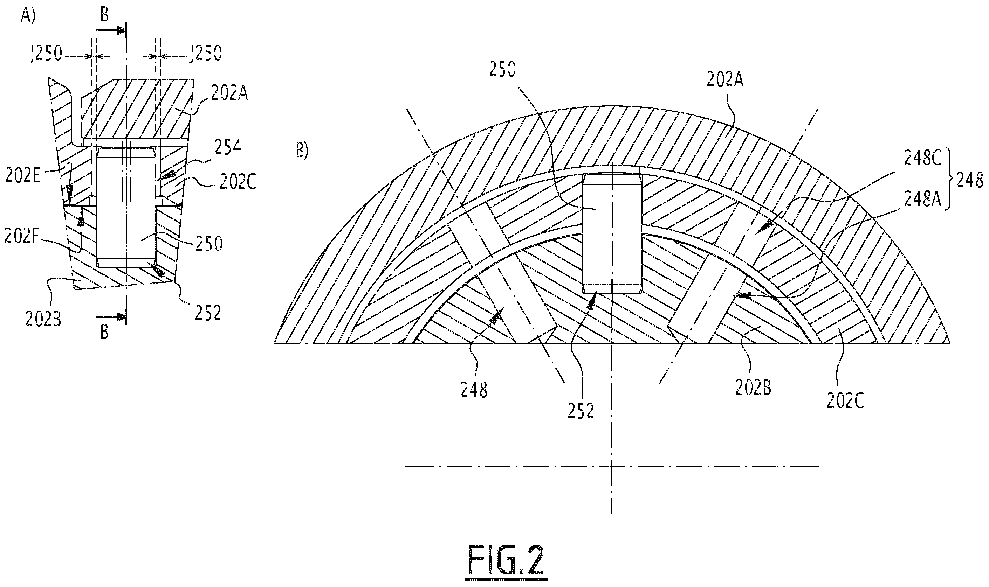

Avantageusement, la goupille 250 est montée serrée dans un logement radial borgne 252 de la partie intermédiaire 202B et avec un jeu longitudinal J250 dans un orifice 254, qui traverse radialement la partie distale 202C. Ce jeu longitudinal J250 est représenté réparti de part et d'autre de la goupille 250 à l'insert A) de la figure 2. Il permet de ne pas contrarier le positionnement longitudinal en butée des parties intermédiaire 202D et distale 202C, avec la surface axiale avant 202J de la partie intermédiaire 202B en appui contre la surface axiale arrière 202H de la partie distale 202C. La goupille 250 est recouverte radialement par la partie proximale du corps 202A.

L'élément femelle 200 comprend également une bague de verrouillage 260 qui est multipartite et montée coulissante autour de la partie distale 202C du corps femelle. La bague de verrouillage 260 comprend un manchon externe 262, une partie centrale 264 et une douille 266. La partie centrale 264 et la douille 266, avantageusement métalliques, sont vissées en butée longitudinale l'une contre l'autre, et le manchon externe 262, avantageusement en matière polymère élastiquement déformable, est mis en place autour de la partie centrale 264 et de la douille 266 vissées.

La bague de verrouillage 260, plus particulièrement sa partie centrale 264, forme une surface interne de recouvrement 268 qui est inclinée par rapport à l'axe longitudinal X200 et qui diverge vers l'arrière du corps femelle 202. On note θ l'angle d'inclinaison de la surface de recouvrement 268 par rapport à l'axe longitudinal X200. Avantageusement, l'angle θ est compris entre 40 et 50°, de préférence égal à environ 45°. De préférence, la valeur de l'angle d'inclinaison θ est la même que celle de l'angle d'inclinaison α de la surface distale S128 de l'encoche externe de verrouillage 128 du corps mâle 102. Ainsi, en configuration accouplée des éléments mâle et femelle 100 et 200 du coupe-circuit 10, la surface interne de recouvrement 268 est sensiblement parallèle à la surface distale S128.

Un ressort 270 est interposé longitudinalement entre une face avant 260A de la bague de verrouillage 260 et une face arrière 202L de la partie distale 202C. Le ressort 270 repousse élastiquement par défaut la bague de verrouillage 260 vers l'arrière du corps femelle 202, de façon à maintenir un contact entre la surface interne de recouvrement 268 et les billes 232, ce qui les repousse élastiquement vers leur première position de verrouillage.

Grâce à la bague de verrouillage 260 et au ressort 270, un maintien élastique du corps mâle 102 en contact, dans le sens de l'emmanchement, avec le corps femelle 202 en position accouplée des éléments mâle et femelle 100 et 200 est obtenu, avec un débit maximum à l'intérieur du coupe-circuit 10. La fonction de rappel élastique de la bague de verrouillage peut être réglée par le dimensionnement adéquat du ressort 270.

Dans toutes ses positions par rapport au corps femelle 202, la bague de verrouillage 260 est dégagée radialement des extrémités externes des premiers évents 244, plus particulièrement des extrémités externes des alésages inclinés 244A qui sont ménagées sur la surface radiale externe du corps 202. La bague 260 n'obture donc pas ces évents 244. En particulier, des encoches radiales internes 266A sont avantageusement prévues en creux sur une surface radiale interne de la douille 266 pour libérer le passage de sortie des premiers évents 244.

Lorsqu'il convient d'accoupler les éléments mâle et femelle 100 et 200, ceux-ci sont alignés sur l'axe d'emmanchement X10, les axes longitudinaux X100 et X200 étant alors confondus avec cet axe d'emmanchement. Dans la suite de l'accouplement des éléments mâle et femelle 100 et 200 et en configuration accouplée de ces éléments, les axes X10, X100 et X200 demeurent confondus.

L'accouplement a lieu en rapprochant les éléments mâle et femelle 100 et 200 le long de l'axe d'emmanchement X10. Ce rapprochement peut être effectué à la main ou, de façon optionnelle et non représentée, au moyen d'un outillage spécifique.

Préalablement à l'emmanchement, les dents radiales 140 sont alignées longitudinalement avec les encoches longitudinales 240 en orientant le corps mâle 102 angulairement par rapport au corps femelle 202 autour de l'axe X10, puis les éléments mâle et femelle 100 et 200 sont rapprochés en engageant les dents radiales 140 dans les encoches longitudinales 240, ce qui permet un indexage angulaire des corps mâle et femelle 102 et 202.

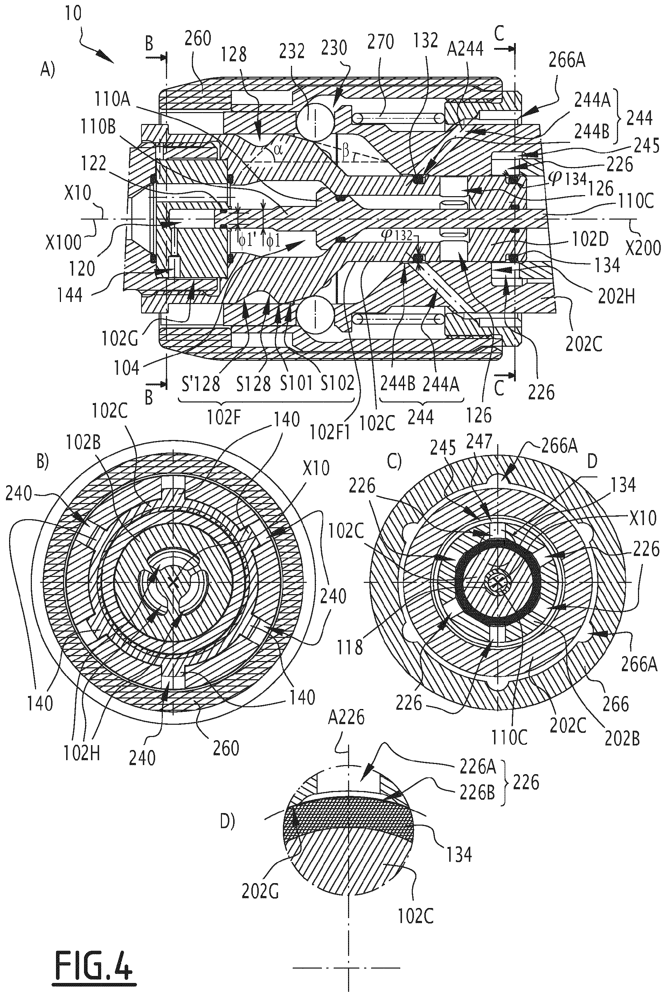

En poursuivant le mouvement d'emmanchement des éléments mâle et femelle, les billes 232 sont repoussées par la surface inclinée externe S102 vers leur position radiale externe de libération, la bague de verrouillage 260 se déplaçant par rapport aux billes 232 en direction de l'avant du corps femelle 202 à l'encontre de l'action du ressort 270, la surface interne de recouvrement 268 de la bague de verrouillage 260 étant maintenue au contact des billes 232 par le ressort 270, comme représenté sur la figure 4.

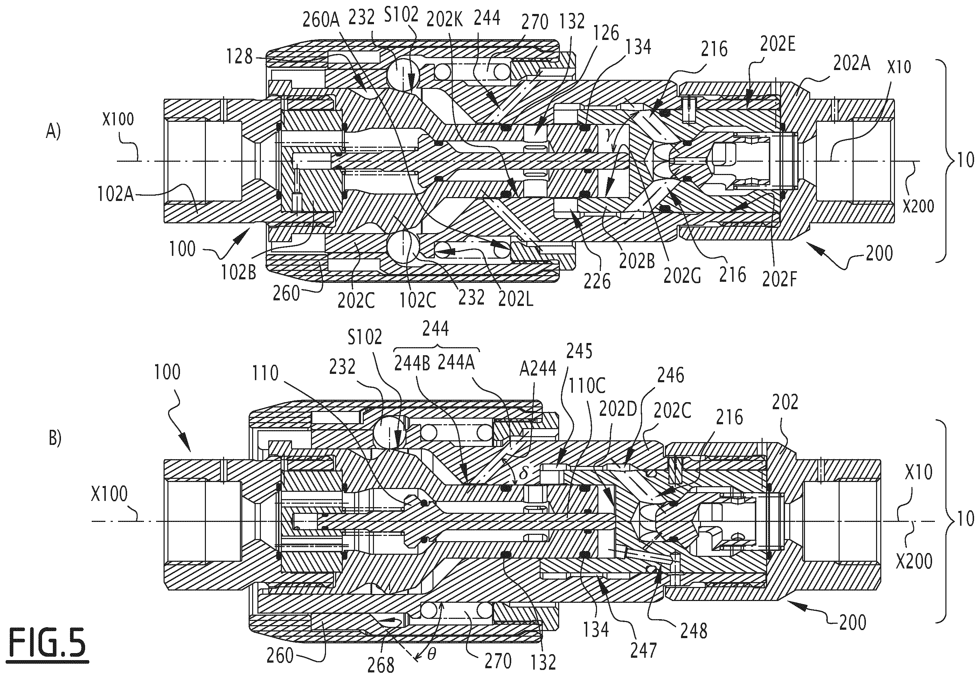

Dans la deuxième position d'accouplement représentée sur l'insert A) de la figure 5, le joint d'étanchéité proximal 132 parvient en coopération radiale sur toute sa périphérie avec la troisième surface radiale interne 202K1 de la partie distale 202C, entre l'embouchure des premiers évents 244 formée par les poches 244B et l'embouchure des deuxièmes passages radiaux 226 formée par les poches 226B, alors que le joint d'étanchéité distal 134 parvient en coopération radiale sur toute sa périphérie avec la première surface radiale interne 202G de la partie intermédiaire 202B, entre les passages radiaux 226 et les deuxièmes évents 248. Les billes 232 sont encore en appui sur la surface inclinée externe S102. Le joint d'étanchéité proximal 132 et le joint d'étanchéité distal 134 isolent alors fluidiquement les premier et deuxième passages radiaux 126, 226 de l'extérieur du coupe-circuit.

Dans cette deuxième position d'accouplement, la tige distale 110C de la soupape 110 vient en appui contre la surface d'appui 202D.

La poursuite du mouvement axial d'emmanchement a pour effet que la surface d'appui 202D repousse la tige distale 110C dans le logement traversant 116 de l'extrémité distale 102D du corps mâle 102, en direction de l'arrière du corps mâle. La tige distale 110C reste en contact étanche avec l'extrémité distale 102D du corps mâle 102 sur toute sa course de déplacement, du fait de l'étanchéité fournie par le premier joint d'étanchéité de tige 118.

Ce mouvement axial supplémentaire a pour effet de déplacer la soupape 110 de l'élément mâle vers sa position reculée d'ouverture du premier conduit interne 104 et d'atteindre la troisième position d'emmanchement représentée sur l'insert B) de la figure 5 où les billes 232 sont en position radiale externe de libération, et libèrent le passage du corps mâle 102 dans le corps femelle 202, sans basculer encore dans les logements de verrouillage 230.

Lors de ce mouvement axial d'emmanchement, l'air emprisonné dans le volume interne de réception V200, entre l'extrémité distale 102D de la partie distale 102C du corps mâle 102 et la surface d'appui 202D du corps femelle 202 est évacué vers l'extérieur du coupe-circuit par les deuxièmes évents 248. L'air emprisonné dans le logement 120 du corps mâle, en arrière de la tige proximale 110B, est évacué par l'évent 144.

La poursuite du mouvement d'emmanchement permet d'atteindre la configuration accouplée de la figure 6 où les billes 232 sont repoussées par la surface de recouvrement 268 de la bague de verrouillage 260 dans leur position radiale interne de verrouillage où elles sont engagées dans l'encoche externe de verrouillage 128 et maintenues dans celle-ci sous l'action de la bague de verrouillage 260 et du ressort 270. Les billes 232 forment alors obstacle au retrait du corps mâle 102 hors du corps femelle 202.

Dans cette configuration accouplée, les premiers passages radiaux 126 du corps mâle 102 sont alignés, chacun selon une direction radiale à l'axe d'emmanchement X10, avec l'un des deuxièmes passages radiaux 226 du corps femelle 202. Dans cette position également, le joint d'étanchéité proximal 132 et le joint d'étanchéité distal 134 isolent fluidiquement les premier et deuxième passages radiaux 126, 226 de l'extérieur du coupe-circuit.

Lorsque le passage de fluide s'établit entre l'élément mâle 100 et l'élément femelle 200 complémentaire et comme expliqué ci-dessus, la soupape 210 de l'élément femelle est déplacée par la pression du fluide présent dans le premier conduit 104, à l'encontre de l'effort élastique exercé par le ressort 224. En effet, en configuration accouplée des éléments mâle et femelle 100 et 200, le fluide sous pression présent dans le conduit 104 s'écoule à travers les premier et deuxième passages radiaux 106 et 126 qui sont alignés puis dans le collecteur formé par la première gorge avant 245, dans le volume périphérique 247, dans le distributeur formé par la deuxième gorge arrière 246 et dans les passages inclinés 216, ce qui l'amène à exercer un effort axial de poussée sur la soupape 210 vers l'arrière du corps femelle 202, avec une intensité plus importante que celle de l'effort élastique exercé par le ressort 224.

En particulier, dans la configuration accouplée des éléments mâle et femelle, la surface interne de recouvrement 268 de la bague de verrouillage 260 est en contact sur l'avant avec les billes 232 et maintient ces billes en contact longitudinal avec la surface distale S128 de l'encoche externe de verrouillage 128, ce qui tend à repousser élastiquement le corps mâle 102 vers la surface d'appui 202D. Le fait que les angles $\alpha$ et $\theta$ ont la même valeur contribue à la stabilité du coupe-circuit 10 dans cette configuration.

En configuration désaccouplée des éléments 100 et 200 et en configuration accouplée de ces éléments, l'extrémité avant de la tige distale 110C s'étend en avant de la surface avant de l'extrémité 102E. En particulier, un jeu axial non nul J10 existe entre les surfaces axiales 102E et 202D dans la configuration accouplée.

On remarque que le diamètre de la troisième surface radiale interne 202K1 de la surface périphérique 202K, avec laquelle coopère radialement le joint d'étanchéité proximal 132 sur toute sa périphérie, en configuration accouplée des éléments 100 et 200, est égal au diamètre de la première surface radiale interne 202G, avec laquelle coopère radialement le joint d'étanchéité distal 134 sur toute sa périphérie, en configuration accouplée des éléments 100 et 200. En outre, le diamètre de la surface périphérique externe du corps mâle 102 avec laquelle coopère radialement le joint d'étanchéité proximal 132, en fond de gorge périphérique externe proximale 136, en configuration accouplée des éléments 100 et 200, est égal au diamètre de la surface périphérique externe 102F du corps mâle 102 avec laquelle coopère radialement le joint d'étanchéité distal 134, en fond de gorge périphérique externe distale 134, en configuration accouplée des éléments 100 et 200. Ainsi, en configuration accouplée des éléments mâle et femelle, la liaison entre le corps mâle 102 et le corps femelle 202 est équilibrée dans la mesure où le joint d'étanchéité proximal 132 et le joint d'étanchéité distal 134 coopèrent radialement respectivement avec le corps mâle 102 et le corps femelle 202 avec les mêmes diamètres d'étanchéité. Compte tenu de cette géométrie des éléments mâle et femelle 100 et 200, la pression à l'intérieur des corps mâle et femelle 102 et 202 n'exerce pas d'effort qui tendrait à séparer ces corps le long de l'axe d'emmanchement X10. Dans ces conditions, l'effort de verrouillage exercé par la bague de verrouillage 260 et les billes 232 doit être dimensionné pour résister uniquement à un effort normalisé de séparation selon la norme ISO19880-3 ou CSA/ANSI HGV 4.4 -2017 en vigueur à ce jour, cet effort étant typiquement de l'ordre de 300 à 660 N (newton). Il en résulte que la sécurité du verrouillage en configuration accouplée des éléments mâle et femelle 100 et 200 est améliorée dans la mesure où, en configuration accouplée, la pression dans le coupe-circuit est équilibrée.

A partir de la configuration accouplée des éléments 100 et 200, si le véhicule 8 s'éloigne de la borne de remplissage 4, au point d'exercer un effort sur la canalisation 9 supérieur à l'effort normalisé de séparation, un mouvement de la surface inclinée distale S128 de l'encoche externe de verrouillage 128 par rapport aux billes de verrouillage 232, en direction de l'arrière de l'élément mâle 100 provoque un déplacement de ces billes selon une direction centrifuge par rapport à l'axe d'emmanchement X10, vers leur position radiale externe de libération, ceci à l'encontre de l'action du ressort 270. Ceci induit le désaccouplement des éléments mâle et femelle du coupe-circuit 10.

En cas de désaccouplement, lors du déplacement du corps mâle 102 hors du volume interne de réception V200, les soupapes 110 et 210 se referment en étant respectivement repoussées par les ressorts 124, 224 qui leur sont associés. La soupape 110 parvient en contact étanche avec le corps mâle 102, alors que le joint d'étanchéité distal 134 est toujours interposé entre les passages radiaux 126, 226 et les deuxièmes évents 248 et que le joint d'étanchéité proximal 132 est toujours interposé entre les passages radiaux 126, 226 et les premiers évents 244, le joint d'étanchéité distal 134 et le joint d'étanchéité proximal 132 isolant fluidiquement les passages radiaux 126, 226 de l'extérieur du coupe-circuit. La fermeture du passage du fluide sous pression dans le conduit interne du coupe-circuit 10 formée par la réunion des conduits internes 104 et 204 entraine la fermeture de la soupape 210 de l'élément femelle qui, lorsqu'elle n'est plus soumise à une pression de fluide, est ramenée vers sa position de fermeture par le ressort 224.

Les distances d136 et d138 sont telles que, lors du désaccouplement des éléments mâle et femelle, le joint d'étanchéité distal 132 est en regard radial des deuxièmes passages radiaux 226 lorsque le joint proximal 134 parvient en regard radial des premiers évents 244. Ceci induit une quasi-concomitance de la perte d'étanchéité des joints d'étanchéité distal 134 et proximal 132, ce qui permet de répartir la purge du fluide emprisonné dans le corps femelle 202 et le corps mâle 102 entre les deux têtes de soupapes 210A et 110A, au niveau des deux joints d'étanchéité distal 134 et proximal 132.

En outre la présence des poches 226B et 244B permet un maintien en position du joint d'étanchéité proximal 132 et du joint d'étanchéité distal 134 lors de la purge au désaccouplement par coopération partielle de la troisième surface radiale interne 202K1 avec le joint d'étanchéité proximal 132 et coopération partielle de la première surface radiale interne 202G avec le joint d'étanchéité distal 134.

Le fluide sous pression emprisonné dans la partie du conduit interne 104 du corps mâle 102, qui est disposée à l'avant de la soupape 110, et dans la partie du conduit interne 204 du corps femelle 202, qui est disposée à l'avant de la soupape femelle 210, peut être purgé rapidement respectivement vers l'extérieur du coupe-circuit via les premier et deuxième évents 244 et 248 puisque l'étanchéité entre le joint d'étanchéité distal 134 et le corps femelle 202 est interrompue au niveau des deuxièmes passages radiaux 226 en même temps que l'étanchéité entre le joint d'étanchéité proximal 132 et le corps femelle 202 est interrompue au niveau des premiers évents 244. En d'autres termes, la perte d'étanchéité avec le corps femelle a lieu simultanément pour le premier joint d'étanchéité proximal 132 et pour le joint d'étanchéité distal 134.

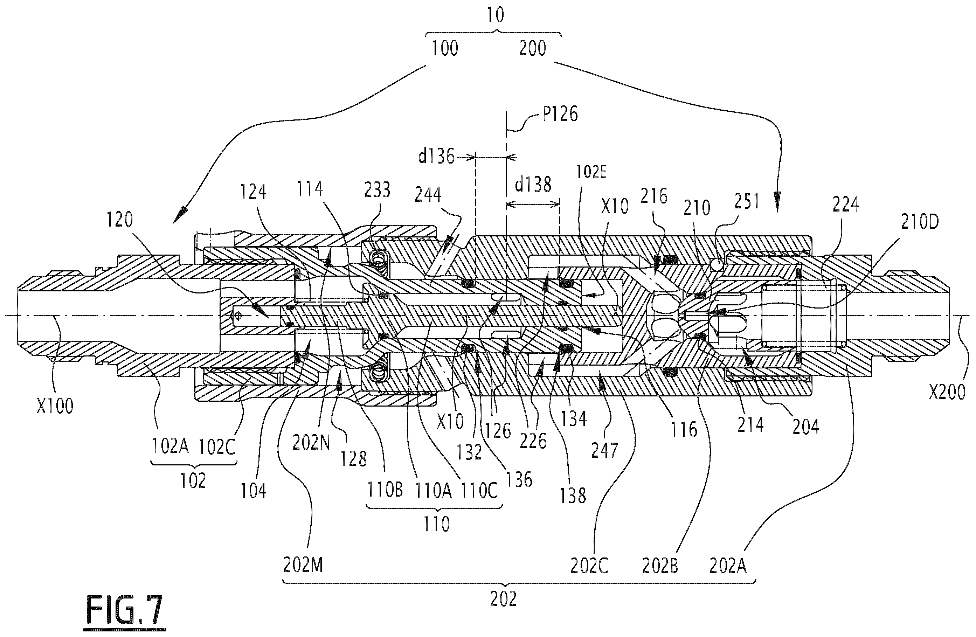

Dans les deuxième, troisième et quatrième modes de réalisation représentés aux figures 7 à 11, les éléments analogues à ceux du premier mode de réalisation portent les mêmes références. Dans ce qui suit, si une référence est mentionnée dans la description sans être portée sur une figure ou portée sur une figure sans être mentionnée dans la description, elle correspond au même élément que celui portant la même référence dans le premier mode de réalisation. Dans ce qui suit, on décrit principalement ce qui distingue les premier, deuxième et troisième modes de réalisation du premier mode de réalisation.

Dans le deuxième mode de réalisation représenté aux figures 7 à 9, le corps mâle 102 est composé de deux parties, à savoir une partie proximale 102A et une partie distale 102C qui sont vissées l'une sur l'autre, sans interposition d'une partie intermédiaire. Une portion de la partie proximale 102A constitue un logement 120, comparable à celui du premier mode de réalisation et dans lequel est engagée une tige proximale 110B d'une soupape 110 de cet élément mâle.

Une soupape 210 est montée dans le corps 202 de l'élément femelle 200, lequel est constitué d'une partie proximale 202A, d'une partie intermédiaire 202B et d'une partie distale 202C, comme dans le premier mode de réalisation.

Comme dans le premier mode de réalisation, un joint d'étanchéité proximal 132 et un joint d'étanchéité distal 134 sont montés de part et d'autre de premiers passages radiaux 126, respectivement dans des gorges 136 et 138 situées à des distances axiales d136 et d138 qui sont différentes l'une de l'autre, par rapport à un plan médian P126 des premiers passages radiaux. La distance d138 est strictement supérieure à la distance d136 et le rapport d138/d136 peut prendre les valeurs indiquées ci-dessus pour le premier mode de réalisation.

Des deuxièmes passages radiaux 226 débouchent radialement sur l'extérieur dans un volume périphérique 247 qui s'étend jusqu'à des passages inclinés 216 comparables à ceux du premier mode de réalisation. En d'autres termes, dans ce deuxième mode de réalisation, on n'utilise par un collecteur ni un distributeur comme dans le premier mode de réalisation.

Le corps femelle 202 comprend, outre des parties proximale 202A, intermédiaire 202B et distale 202C, un manchon 202M qui est vissé sur l'extérieur de la partie distale 202C et qui forme une surface cylindrique 202N, à section circulaire autour de l'axe longitudinal X200, pour le guidage du corps mâle 102 en emmanchement dans le corps femelle 202.

A la différence du premier mode de réalisation, le coupe-circuit 10 du deuxième mode de réalisation ne comprend pas de billes de verrouillage mais un unique organe de verrouillage formé par un ressort 233 à spires inclinées, qui est logé à jeu longitudinal réduit dans une gorge périphérique interne 235 de la partie distale 202C du corps femelle 202. Ce ressort peut être de type « bal spring » commercialisé par la société Bal Seal Engineering, ou de tout autre type équivalent. De préférence, le ressort 233 est conformé en anneau. En d'autres termes, le ressort 233 est contenu dans un volume torique. Le ressort 233 est soudé sur lui-même avant la mise en place dans la gorge périphérique interne 235 ; l'anneau est alors fermé. En variante, le ressort 233 est conformé en anneau dans la gorge périphérique interne 235 à partir d'un ressort en longueur. Dans ce dernier cas, l'anneau est ouvert. Préférentiellement, le ressort 233 s'étend tout autour de l'axe longitudinal X200 lorsqu'il est en place dans la gorge périphérique interne 235. Il a vocation à se déformer élastiquement pour s'engager dans une encoche externe de verrouillage 128 ménagée sur la surface périphérique externe 102F du corps mâle 102, lors de l'emmanchement des éléments mâle 100 et femelle 200. En particulier, au contact de la surface périphérique externe 102F dont les diamètres varient, des efforts de compression perpendiculaires à l'axe longitudinal X200 s'appliquent sur les spires du ressort 233. Ainsi le ressort 233 est configuré pour passer de la première position de verrouillage, où le ressort 233 est engagé dans l'encoche externe de verrouillage 128, pour s'opposer au retrait axial du corps mâle 102 hors du corps femelle 202 en configuration accouplée, à la deuxième position de libération, où le retrait axial du corps mâle hors du corps femelle est possible. En effet, dans la deuxième position de libération, le ressort 233 est comprimé dans la gorge périphérique interne 235 de la partie distale 202C et libère le passage pour le corps mâle 102 dans le volume interne V200 du corps femelle 202. Dans la première position de verrouillage, le ressort 233 forme obstacle au passage du corps mâle 102 dans le corps femelle 202 dans le sens du retrait axial du corps mâle 102 hors du corps femelle 202.

Aucune bague de verrouillage comparable à la bague de verrouillage 260 du premier mode de réalisation n'est utilisée dans le deuxième mode de réalisation.

Dans la mesure où le ressort de verrouillage 233 est masqué à l'intérieur de l'élément femelle 200, il ne peut pas être touché, ce qui est favorable en termes de sécurité de fonctionnement et de fiabilité du coupe-circuit 10. Ceci améliore également la compacité radiale du coupe-circuit.

Une surface inclinée S102, ici de géométrie en tronçon de sphère, sert à amener le ressort 233 en engagement dans l'encoche de verrouillage, comme dans le premier mode de réalisation.

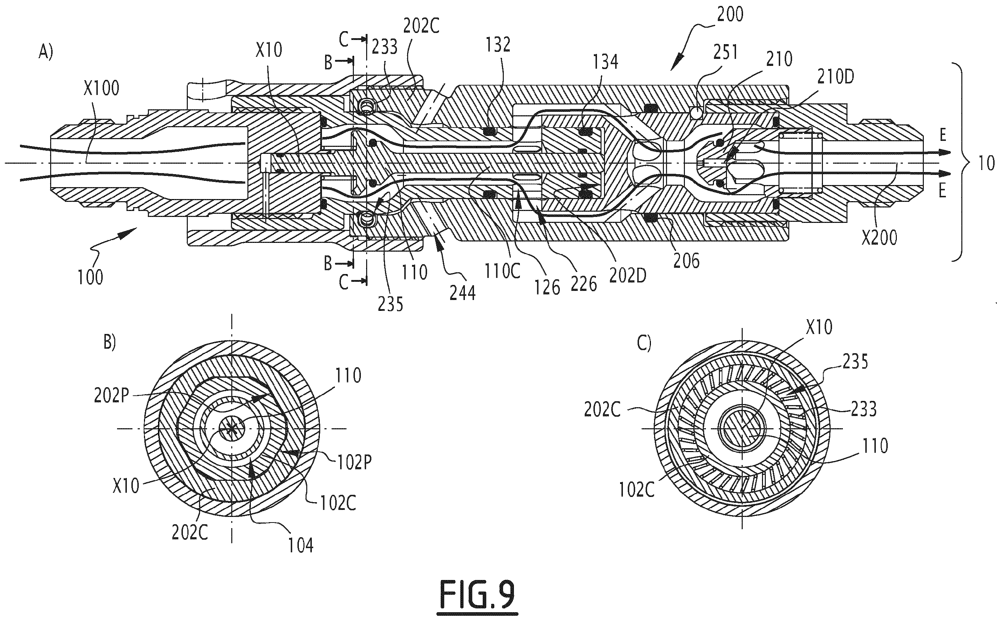

L'indexage angulaire entre les corps mâle et femelle 102 et 202 est obtenu par des formes hexagonales visibles sur l'insert B) de la figure 9 qui viennent en prise après le passage de la soupape 110 de l'élément mâle 100 de sa position avancée de fermeture à sa position reculée d'ouverture, du fait de l'appui de la tige distale 110C sur une surface d'appui 202D formée par le corps femelle 202, comme dans le premier mode de réalisation.

Plus précisément, une surface externe hexagonale 102P de la partie distale 102C du corps mâle et une surface interne hexagonale 202P de la partie distale 202C du corps femelle constituent ensemble des moyens d'indexage des corps mâle et femelle 102 et 202 autour de l'axe d'emmanchement X10.

En outre, à la place d'une goupille comme dans le premier mode de réalisation, une bille d'indexage 251 est prévue entre les parties intermédiaire et distale 202B et 202C du corps femelle. Cette bille d'indexage 251 est insérée à jeu axial radial réduit dans un logement prévu dans l'une de ces parties et avec un léger jeu axial dans un autre logement prévu dans l'autre partie.

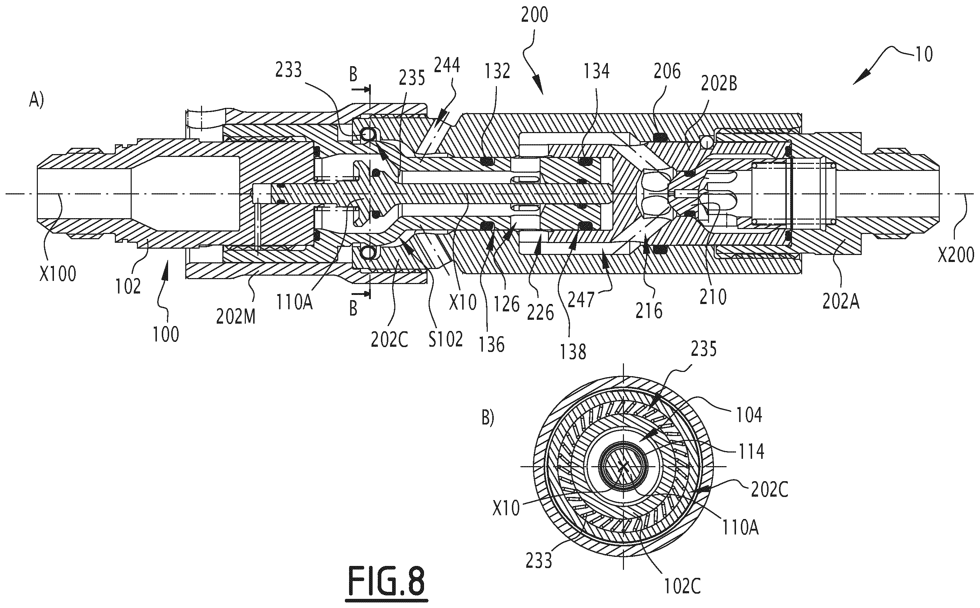

En outre, un passage de fuite lente 210D est ménagé à travers la tête 210A de la soupape 210, ce qui permet un écoulement de fluide, à débit faible et contrôlé, à travers la soupape 210, y compris lorsqu'elle est en appui sur son siège 212 comme dans les positions des figures 7 et 8.

En configuration accouplée des éléments mâle et femelle représentée à la figure 9, les premiers passages radiaux 126 et les deuxièmes passages radiaux 226 sont alignés axialement, le long de l'axe d'emmanchement X10 et radialement, autour de cet axe.

Les figures 7 et 8 représentent respectivement une première position et une deuxième position en cours d'emmanchement des éléments mâle et femelle 100 et 200, alors que la figure 9 représente une configuration accouplée de ces éléments. Pour le reste, le fonctionnement du coupe-circuit 10 de ce deuxième mode de réalisation est comparable à celui du premier mode de réalisation.

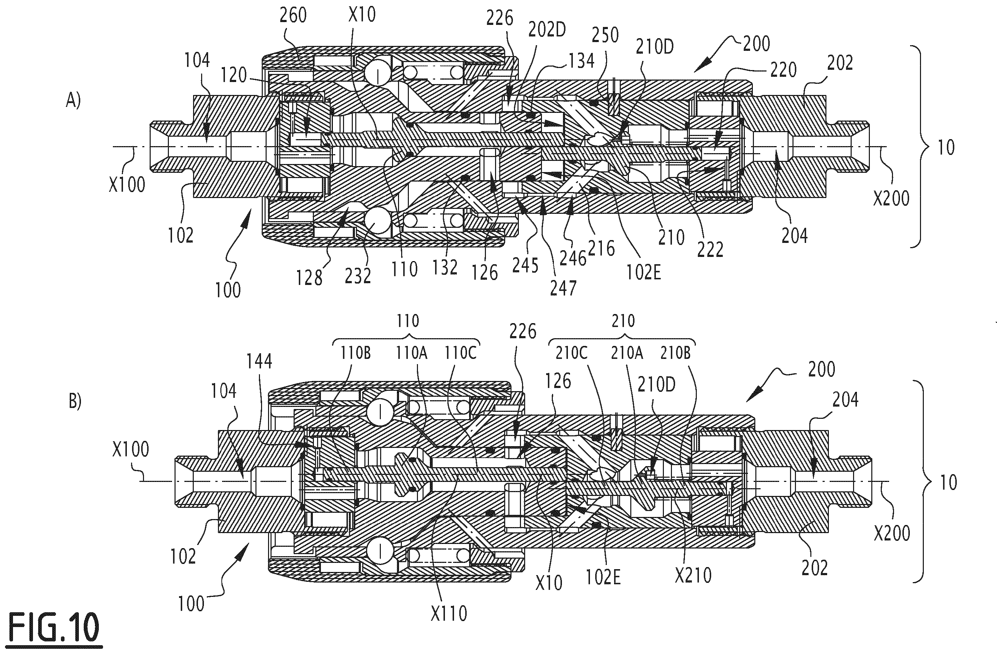

Dans le troisième mode de réalisation représenté à la figure 10, respectivement en position intermédiaire d'accouplement sur l'insert A) et en configuration accouplée sur l'insert B), la soupape 110 de l'élément mâle 100 comprend, comme dans le premier mode de réalisation, une tête 110A, une tige proximale 110B et une tige distale 110C.

Ici, la soupape 210 de l'élément femelle 200 comprend également une tête 210A, une tige proximale 210B et une tige distale 210C qui dépasse de la surface d'appui 202D.

La soupape 110 s'étend selon un axe longitudinal X110 sur lequel elle est centrée. La soupape 210 s'étend selon un axe longitudinal X210 sur lequel elle est centrée. Les axes X110 et X210 sont parallèles à l'axe d'emmanchement.

La soupape 110 est analogue à celles des premier et deuxièmes modes de réalisation et fonctionne de la même façon. La soupape 210 fonctionne de façon comparable à la soupape 110. La tête de soupape 110A porte un joint d'étanchéité analogue au joint d'étanchéité 114 du premier mode de réalisation. La tête de soupape 210A est dépourvue de joint d'étanchéité et vient en appui contre un siège comparable au siège 212 du premier mode de réalisation sous l'action d'un ressort de rappel.

La tige proximale 210B est engagée dans un logement axial 220 délimité par le corps femelle 202, de façon comparable à la tige proximale 110B de la soupape 110 qui est engagée dans un logement 120 du corps mâle 102, comme dans le premier mode de réalisation. Un évent 222 relie le logement 220 à l'extérieur du corps femelle, comme l'évent 144 relie le logement 120 à l'extérieur du corps mâle.

La tige proximale 210C de la soupape 210 de l'élément femelle 200 est configurée pour venir en appui contre la surface avant d'extrémité 102E du corps mâle 102 alors que, comme dans le premier mode de réalisation, la tige proximale 110C de la soupape 110 vient en appui contre la surface d'appui 202D formée par le corps femelle 202. En d'autres termes, la surface avant d'extrémité 102E du corps mâle constitue une surface d'appui pour une tige proximale de soupape 210C.

Ceci permet que l'actionnement de la soupape 210 de l'élément femelle est effectué non pas par la pression du fluide dans le conduit interne 104 mais par le corps 102 de l'élément mâle 100. Une double obturation est ainsi réalisée au sein du coupe-circuit 10 et les positions d'ouverture des deux soupapes 110 et 210 sont gérées avec précision, ce qui permet un débit maximum de fluide en configuration accouplée des éléments mâle et femelle 100 et 200.

Ceci requiert un décalage radial, par rapport à l'axe d'emmanchement X10 entre, d'une part, une zone de contact entre le corps mâle 102 et la soupape 210 et, d'autre part, une zone de contact entre le corps femelle 202 et la soupape 110.

Dans le mode de réalisation de la figure 10, les axes longitudinaux centraux X110 et X210 des soupapes 110 et 210, en particulier des tiges proximales 110C et 210C, sont décalés radialement l'un de l'autre et décalés radialement de l'axe longitudinal X100, respectivement X200, ce qui impose un indexage radial précis autour de l'axe d'emmanchement X10, entre les éléments mâle et femelle 100 et 200.

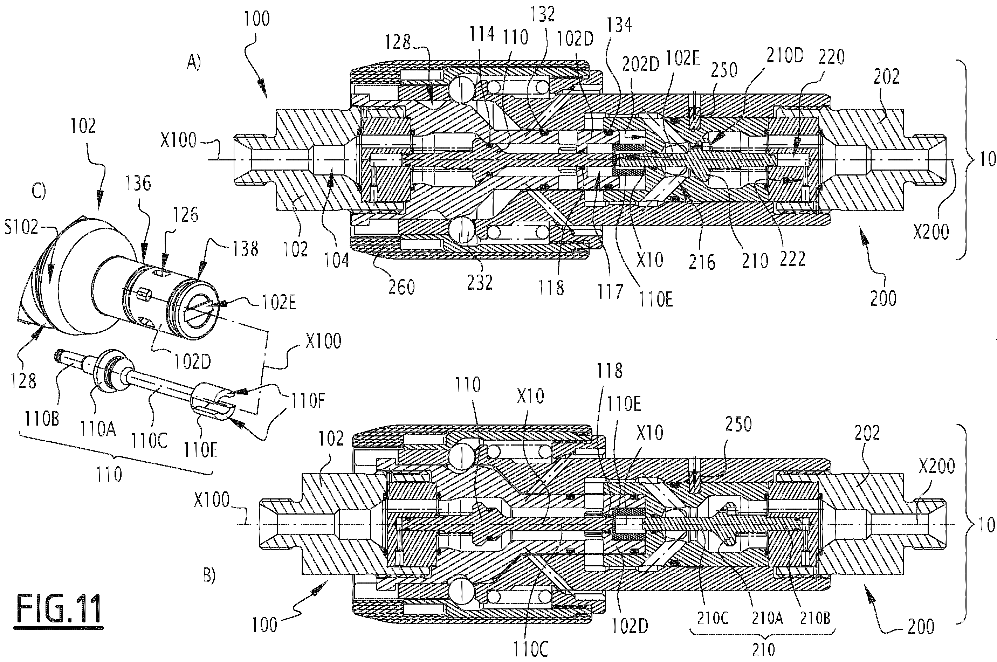

Dans le quatrième mode de réalisation représenté à la figure 11, chaque soupape 110 de l'élément mâle 100 ou 210 de l'élément femelle 200 est également manoeuvrée à l'ouverture par le corps de l'autre élément.

Dans le quatrième mode de réalisation, les tiges distales 110C et 210C des soupapes 110 et 210 qui appartiennent respectivement à l'élément mâle 100 et à l'élément femelle 200 du coupe-circuit 10 sont coaxiales, avantageusement centrées sur l'axe d'emmanchement X10.

La soupape 110 de l'élément mâle 100 comprend un embout 110E solidarisé avec sa tige distale 110C et dont des faces avant 110F sont en portions de cercle et configurées pour entrer en contact avec la surface d'appui 202D du corps femelle 202, en cours d'emmanchement comme représenté sur l'insert A) de la figure 11 ou en configuration accouplée comme représentée sur l'insert B). Ces faces avant 110F sont décalées radialement d'une surface avant d'extrémité 102E du corps mâle qui est ici formée par un barreau terminal du corps mâle et qui forme une surface d'appui configurée pour entrer en contact avec l'extrémité avant de la tige proximale 210C de la soupape 210 de l'élément femelle.

En cours d'accouplement, la mise en contact entre la surface avant d'extrémité 102E et la soupape 210 est concomitante à la mise en contact de l'embout 110E avec la surface d'appui 202D.

L'embout est configuré pour dépasser du corps mâle 102 vers l'avant à travers deux ouvertures ménagées de part et d'autre barreau terminal, ces ouvertures étant visibles sur l'insert C) de la figure 11. Sur l'insert C) de la figure 11, et pour la clarté du dessin, les joints 114, 132 et 134 ne sont pas représentés.

La zone de contact entre la surface d'appui 102E du corps mâle 102 et la soupape 210 et la zone de contact entre la surface d'appui 202D du corps femelle 202 et la soupape 110 sont décalées l'une de l'autre radialement à l'axe d'emmanchement X10. En particulier, dans le quatrième mode de réalisation, la zone de contact entre la surface d'appui 202D du corps femelle 202 et la soupape 110 entoure la zone de contact entre la surface d'appui 102E du corps mâle 102 et la soupape 210.

En configuration accouplée des éléments mâle et femelle, l'embout 110E est reçu dans un logement 117 ménagé au sein de l'extrémité distale 102D du corps mâle 102. Le logement 117 a un diamètre supérieur au diamètre d'étanchéité entre la tige distale 110 et l'extrémité distale 102D, ce diamètre d'étanchéité étant défini par le premier joint d'étanchéité de tige 118.

En configuration désaccouplée ou dans une position intermédiaire d'accouplement représentée sur l'insert A) de la figure 11, l'embout 110 dépasse vers l'avant de l'extrémité 102D, en particulier de sa surface avant d'extrémité 102E.

Dans les troisième et quatrième modes de réalisation, la tête 210A de la soupape 210 de l'élément femelle 200 est équipée d'un passage de fuite lente 210D, avec la même fonction que le passage de fuite lente 210D du deuxième mode de réalisation.

Dans les deuxième, troisième et quatrième modes de réalisation, l'utilisation d'un passage de fuite lente est facultative.

Selon une variante non représentée de l'invention, l'indexage des corps mâle et femelle 102 et 202 autour de l'axe d'emmanchement X10 peut être associé à un mécanisme de détrompage qui autorise l'accouplement d'un seul type de corps mâle avec un seul type de corps femelle.

Dans les troisième et quatrième modes de réalisation, des distances comparables aux distances d136 et d138 des deux premiers modes de réalisation peuvent également être définies, vis-à-vis d'un plan médian des premiers passages radiaux 126. La distance associée au joint d'étanchéité distal 134 est strictement supérieure à la distance associée au joint d'étanchéité proximal 132, de préférence au moins 1,5 fois supérieure, de préférence encore au moins 1.75 fois supérieure.

Dans tous les modes de réalisation, le ou les organes de verrouillage sont rappelés élastiquement vers leur première position de verrouillage, par l'effort élastique de la bague de verrouillage 260 sur les billes 232 ou par déformation élastique du ressort 233 lui-même.

Dans tous les modes de réalisation, la surface inclinée externe S102 diminue l'effort d'emmanchement des éléments mâle et femelle 100 et 200 et sécurise la configuration accouplée de ces éléments. En cas d'accouplement incomplet de ces éléments, le ou les organes de verrouillage 232 ou 233, en contact avec la surface inclinée externe S102, exercent un effort de retrait du corps mâle hors du corps femelle et ramènent ces éléments en configuration désaccouplée, avec leurs soupapes respectives 110 et 210 fermées.

Dans l'exemple des figures, le coupe-circuit 10 est configuré pour le passage d'hydrogène liquide sous-pression, avec une pression comprise entre 300 et 900 bars. En variante, il est configuré pour le passage d'un autre fluide sous pression, liquide ou gazeux, par exemple du gaz naturel.

Dans une variante non représentée, l'axe du cylindre formant chaque premier passage radial 126 est incliné, jusqu'à 45°, par rapport à la direction radiale à l'axe longitudinal X100. Dans ce cas, le plan radial médian à considérer est le plan radial passant par le milieu, le long de l'axe longitudinal X100, de l'embouchure des premiers passages radiaux au niveau de la surface périphérique externe 102F du corps mâle 102.

Dans une variante non représentée, l'axe du cylindre A226 formant chaque deuxième passage radial 226 est incliné, jusqu'à 45°, par rapport à la direction radiale à l'axe longitudinal X200.

Dans une variante non représentée, le joint 114 peut coopérer longitudinalement avec la partie distale 102C du corps mâle 102. La portion d'obturation de la tête de soupape 110A est alors en butée longitudinale avant contre le corps mâle via le joint 114 en position de fermeture de la première soupape 110. De même, le joint 214 peut coopérer longitudinalement avec la partie intermédiaire 202B du corps femelle 202. La portion d'obturation de la tête de soupape 210A est alors en butée longitudinale avant contre le corps femelle via le joint 214 en position de fermeture de la deuxième soupape 210.

Toute caractéristique décrite ci-dessus pour un mode de réalisation ou une variante est applicable aux autres modes de réalisation et variantes, pour autant que cela est techniquement possible.

## Revendications

1. Coupe-circuit (10) pour le raccordement de deux tronçons (92, 94) de canalisation (9) d'une installation (2) de manutention de fluide sous pression, ce coupe-circuit comprenant un élément mâle (100) et un élément femelle (200) destinés à s'emmancher l'un dans l'autre selon un axe d'emmanchement (X10),

   l'élément mâle comprenant

   - un corps mâle (102) centré sur l'axe d'emmanchement (X10) et comprenant :

      ○ un premier conduit interne (104) de circulation de fluide sous pression ;
      ○ au moins un premier passage radial (126) reliant le premier conduit interne (104) à une surface périphérique externe (102F) du corps mâle ; et
      ○ une encoche externe de verrouillage (128),

   - une première soupape (110), mobile dans le premier conduit interne (104), selon l'axe d'emmanchement (X10), entre une position avancée de fermeture du premier conduit interne (104) et une position reculée d'ouverture du premier conduit interne, et comprenant une portion d'obturation (110A), qui est en butée longitudinale avant contre le corps mâle en position de fermeture de la première soupape ; et
   - un ressort (124) repoussant la première soupape (110) vers la position avancée de fermeture ;

   l'élément femelle comprenant

   - un corps femelle (202) comprenant un deuxième conduit interne (204) de circulation de fluide sous pression et au moins un deuxième passage radial (226) reliant le deuxième conduit interne à un volume interne (V200) de réception du corps mâle dans le corps femelle ;
   - une deuxième soupape (210) mobile dans le deuxième conduit interne
   - au moins un organe de verrouillage (232 ; 233) reçu dans un logement de verrouillage (230, 235) et configuré pour passer d'une première position de verrouillage, où l'organe de verrouillage est engagé dans l'encoche externe de verrouillage (128), pour s'opposer au retrait axial du corps mâle (102) hors du corps femelle (202) en configuration accouplée des éléments mâle (100) et femelle (200), à une deuxième position de libération, où le retrait axial du corps mâle (102) hors du corps femelle (202) est possible,

dans lequel, en configuration accouplée des éléments mâle et femelle,

- les premiers et deuxième passages radiaux (126, 226) sont en communication fluidique ;
- le ou chaque organe de verrouillage (232 ; 233) est dans la première position de verrouillage ;
- la première soupape (110) est en position reculée d'ouverture ;
- un joint d'étanchéité proximal (132) et un joint d'étanchéité distal (134) sont disposés, le long de l'axe d'emmanchement (X10), de part et d'autre des premier et deuxième passages radiaux (126, 226) et coopèrent radialement respectivement avec une surface radiale interne (202G, 202K1) du corps femelle (202) délimitant le volume interne (V200) et avec la surface périphérique externe (102F) du corps mâle de manière à isoler fluidiquement les premier et deuxième passages radiaux (126, 226) de l'extérieur du coupe-circuit,

**caractérisé en ce que**

- la première soupape (110) comprend également une tige distale (110C) qui est montée coulissante, entre la position avancée de fermeture et la position reculée d'ouverture, dans un logement (116) du corps mâle (102) traversant une extrémité distale (102D) du corps mâle ;
- un premier joint d'étanchéité radiale de tige (118) coopère radialement avec la tige distale (110C) et avec l'extrémité distale (102D) du corps mâle;
- l'élément femelle (200) comprend une surface d'appui (202D) configurée pour entrer en contact avec la première soupape (110) et la déplacer, lors d'un emmanchement des éléments mâle et femelle, de la position avancée de fermeture vers la position reculée d'ouverture ;
- dans une position intermédiaire d'accouplement des éléments mâle (100) et femelle (200),

- la première soupape (110) est en position avancée de fermeture et en contact avec la surface d'appui (202D) de l'élément femelle ;
- chaque organe de verrouillage (232, 233) n'est pas dans la première position de verrouillage ;
- le joint d'étanchéité proximal (132) et le joint d'étanchéité distal (134) sont disposés, le long de l'axe d'emmanchement (X10), de part et d'autre des premier et deuxième passages radiaux (126, 226) et isolent fluidiquement les premier et deuxième passages radiaux (126, 226) de l'extérieur du coupe-circuit;

- le joint d'étanchéité proximal (132) et le joint d'étanchéité distal (134) sont respectivement reçus dans une gorge périphérique externe proximale (136) et dans une gorge périphérique externe distale (138) de la surface périphérique externe (102F) du corps mâle (102) ;
- une première distance longitudinale (d138), mesurée parallèlement à l'axe d'emmanchement (X10) entre la gorge périphérique externe distale (138) et un plan radial médian (P126) du premier passage radial (126), est strictement supérieure à une deuxième distance longitudinale (d136), mesurée parallèlement à l'axe d'emmanchement entre la gorge périphérique externe proximale (136) et le plan radial médian (P126).

2. Coupe-circuit selon la revendication 1, dans lequel un rapport (d138/d136) entre la première distance longitudinale (d138) et la deuxième distance longitudinale (d136) est supérieur ou égal à 1,5, de préférence à 1,75.

3. Coupe-circuit selon l'une des revendications précédentes, dans lequel le corps femelle (200) comprend

- au moins un premier évent (244), qui traverse radialement le corps femelle et qui relie fluidiquement le volume interne (V200) en avant du deuxième passage radial (226) et l'extérieur du coupe-circuit;
- au moins un deuxième évent (248) qui traverse radialement le corps femelle et qui relie fluidiquement le volume interne (V200) du corps femelle, en arrière du deuxième passage radial, et l'extérieur du coupe-circuit,

dans lequel, en configuration accouplée des éléments mâle (100) et femelle (200) et dans la position intermédiaire d'accouplement, les premier et deuxième passages radiaux (126, 226) sont isolés des premier et deuxième évents (244, 248) respectivement par les joints d'étanchéité proximal (132) et distal (134).

4. Coupe-circuit selon la revendication 3, dans lequel, lors du désaccouplement des éléments mâle et femelle depuis la configuration accouplée, le joint d'étanchéité distal (132) est en regard radial du deuxième passage radial (226) lorsque le joint d'étanchéité proximal (134) parvient en regard radial du premier évent (244).

5. Coupe-circuit selon l'une des revendications 3 ou 4, dans lequel le premier évent (244) et le deuxième passage (226) débouchent chacun sur une surface radiale interne (202G, 202K1) du corps femelle (202) au niveau de poches (244B, 226B) ménagées en creux, localement autour de l'axe d'emmanchement (X10), à partir de cette surface radiale interne.

6. Coupe-circuit selon l'une des revendications 3 à 5, dans lequel le premier évent (244) comprend une portion cylindrique (244A) inclinée par rapport à l'axe d'emmanchement et dont une extrémité arrière débouche sur une surface radiale externe du corps femelle (202) et est disposée en arrière d'une extrémité avant de la portion cylindrique (244A).

7. Coupe-circuit selon l'une des revendications précédentes comprenant plusieurs organes de verrouillage, dans lequel chaque organe de verrouillage est une bille (232) mobile dans un logement de verrouillage (230) qui traverse radialement le corps femelle, l'élément femelle comprenant une bague de verrouillage (260) qui est montée coulissante autour du corps femelle (202) et qui entoure les organes de verrouillage, la bague de verrouillage étant rappelée élastiquement vers l'arrière, la bague de verrouillage étant en contact sur l'arrière, en configuration accouplée des éléments mâle (100) et femelle (200), avec les billes par une surface interne de recouvrement (268) inclinée par rapport à l'axe d'emmanchement (X10) et divergeant vers l'arrière du corps femelle.

8. Coupe-circuit selon l'une des revendications 1 à 6, dans lequel l'organe de verrouillage est un ressort de verrouillage (233) logé dans un logement de verrouillage (235) formé par une gorge périphérique interne (235) du corps femelle (202), le ressort de verrouillage étant configuré pour se déformer élastiquement entre sa première position de verrouillage et sa deuxième position de libération.

9. Coupe-circuit selon l'une des revendications précédentes, dans lequel chaque deuxième passage radial (226) est délimité longitudinalement par une première partie (202C) et par une deuxième partie (202B) du corps femelle, distincte de la première partie, la deuxième partie (202B) et la première partie (202C) étant solidarisées en butée longitudinale l'une contre l'autre, et dans lequel, en configuration accouplée et dans la configuration intermédiaire d'accouplement, le joint d'étanchéité proximal (132) coopère radialement avec une surface radiale interne (202K1) appartenant à la première partie (202C) et le joint d'étanchéité distal (134) coopère radialement avec une surface radiale interne (202G) appartenant à la deuxième partie (202B).

10. Coupe-circuit selon l'une des revendications précédentes, dans lequel chaque premier passage radial (126) et chaque deuxième passage radial (223) est à section allongée, avec une dimension maximale parallèle à l'axe d'emmanchement (X10).

11. Coupe-circuit selon l'une des revendications précédentes, dans lequel la première soupape (110) comprend une tige proximale (110B) coulissante dans un logement (120) du corps mâle (102) entre la position avancée de fermeture et la position reculée d'ouverture, avec interposition radiale d'un deuxième joint d'étanchéité de tige (122), dans lequel le premier joint d'étanchéité de tige (118) est monté dans une gorge périphérique interne du corps mâle, alors que le deuxième joint d'étanchéité de tige (122) est logé dans une gorge périphérique externe de la tige proximale et dans lequel un rapport ($\Phi1/\Phi2$) entre, d'une part, un diamètre ($\Phi1$) de la tige proximale et, d'autre part, un diamètre ($\Phi2$) de la tige distale (110C) est compris entre 0,95 et 1.

12. Coupe-circuit selon l'une des revendications précédentes, dans lequel, en configuration accouplée des éléments mâle (100) et femelle (200),

   - un diamètre d'une surface radiale interne (202K1) du corps femelle (202) avec laquelle coopère radialement le joint d'étanchéité proximal (132) est égal à un diamètre d'une surface radiale interne (202G) du corps femelle avec laquelle coopère radialement le joint d'étanchéité distal (134); et
   - un diamètre d'une surface périphérique externe (102F) du corps mâle (102) avec laquelle coopère radialement le joint d'étanchéité proximal (132) est égal à un diamètre d'une surface périphérique externe (102F) du corps mâle avec laquelle coopère radialement le joint d'étanchéité distal (134).

13. Coupe-circuit selon l'une des revendications précédentes, dans lequel la surface d'appui (202D) configurée pour entrer en contact avec la première soupape (110) est formée sur le corps femelle (202).

**14.** Coupe-circuit selon la revendication 13, dans lequel la deuxième soupape (210) comprend une tige distale (210C) qui est montée coulissante de façon étanche dans un logement traversant du corps femelle (202), dans lequel le corps mâle (102) forme une surface d'appui (102E) configurée pour entrer en contact avec la deuxième soupape et la déplacer, lors de l'emmanchement des éléments mâle (100) et femelle (200), d'une position avancée de fermeture vers une position reculée d'ouverture et dans lequel une zone de contact entre la surface d'appui (102E) du corps mâle (102) et la deuxième soupape (210) et une zone de contact entre la surface d'appui (202D) du corps femelle (202) et la première soupape (110) sont décalées radialement l'une de l'autre.

**15.** Installation de manutention de fluide sous pression comprenant une source (4) de fluide sous pression et une première partie (62) d'un raccord (6) destinée à être accouplée à une deuxième partie (64) de raccord reliée à un volume (82) de stockage ou d'utilisation du fluide, la première partie (62) du raccord étant reliée fluidiquement à la source par une canalisation (9), **caractérisée en ce qu'**un coupe-circuit (10) selon l'une des revendications précédentes est relié fluidiquement à la source (4) par un premier tronçon (92) de la canalisation et à la première partie (62) du raccord (6) par un deuxième tronçon (94) de la canalisation.

FIG.1

A)

B)

EP 4 682 418 A1

FIG.2

FIG.3

FIG.4

A)

B)

FIG.5

EP 4 682 418 A1

FIG.6

EP 4 682 418 A1

**FIG.7**

EP 4 682 418 A1

FIG.8

FIG.9

EP 4 682 418 A1

A)

104
120
X100
102
100
260
X10
226 202D
134
250
210D
200
220 202
10
X200
204
128 232 110 132 126 245 247 246 216 102E 210 222

B)

X100
104
144
102
100
110
110B 110A 110C
226
210
210C 210A 210B
126 210D
200
204
202
10
X200
X110
X10 102E
X210

FIG.10

EP 4 682 418 A1

FIG.11

EP 4 682 418 A1

| | Europäisches Patentamt European Patent Office Office européen des brevets | **RAPPORT DE RECHERCHE EUROPEENNE** | **Numéro de la demande** EP 25 19 0173 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 3 457 016 B1 (STAUBLI SA ETS [FR]) 10 novembre 2021 (2021-11-10) * alinéa [0014] - alinéa [0129]; figures 1-15 * | 1-15 | INV. F16L37/23 F16L37/35 F16L55/10 |
| A | WO 94/13996 A1 (PARKER HANNIFIN CORP [US]) 23 juin 1994 (1994-06-23) * page 4, ligne 17 - page 8, ligne 18; figures 1-5 * | 1-15 | |
| A | EP 0 900 966 B1 (STAUBLI SA ETS [FR]) 13 novembre 2002 (2002-11-13) * alinéa [0025] - alinéa [0046]; figures 1-4 * | 1-15 | |
| A | DE 11 2016 005591 T5 (NITTO KOHKI CO [JP]; TOYOTA MOTOR CO LTD [JP]) 31 octobre 2018 (2018-10-31) * alinéa [0016] - alinéa [0027]; figures 1-4 * | 1-15 | |

**DOMAINES TECHNIQUES RECHERCHES (IPC)**

F16L

Le présent rapport a été établi pour toutes les revendications

| Lieu de la recherche | Date d'achèvement de la recherche | Examinateur |
|---|---|---|
| Munich | 7 novembre 2025 | Möbius, Henning |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

EP 4 682 418 A1

**ANNEXE AU RAPPORT DE RECHERCHE EUROPEENNE
RELATIF A LA DEMANDE DE BREVET EUROPEEN NO.**

EP 25 19 0173

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-11-2025

| Document brevet cité au rapport de recherche | Date de publication | Membre(s) de la famille de brevet(s) | Date de publication |
|---|---|---|---|
| EP 3457016 B1 | 10-11-2021 | CA 3017049 A1 | 15-03-2019 |
| | | CN 109555925 A | 02-04-2019 |
| | | EP 3457016 A1 | 20-03-2019 |
| | | FR 3071301 A1 | 22-03-2019 |
| | | US 2019086014 A1 | 21-03-2019 |
| WO 9413996 A1 | 23-06-1994 | AU 5137593 A | 04-07-1994 |
| | | US 5255699 A | 26-10-1993 |
| | | WO 9413996 A1 | 23-06-1994 |
| EP 0900966 B1 | 13-11-2002 | AT E227819 T1 | 15-11-2002 |
| | | CA 2244538 A1 | 04-03-1999 |
| | | DE 69809355 T2 | 09-10-2003 |
| | | EP 0900966 A1 | 10-03-1999 |
| | | JP 4098895 B2 | 11-06-2008 |
| | | JP H11141778 A | 28-05-1999 |
| | | US 6050298 A | 18-04-2000 |
| DE 112016005591 T5 | 31-10-2018 | CN 108368960 A | 03-08-2018 |
| | | DE 112016005591 T5 | 31-10-2018 |
| | | JP 6598877 B2 | 30-10-2019 |
| | | JP WO2017099103 A1 | 13-12-2018 |
| | | KR 20180079436 A | 10-07-2018 |
| | | US 2018283594 A1 | 04-10-2018 |
| | | WO 2017099103 A1 | 15-06-2017 |

EPO FORM P0460

Pour tout renseignement concernant cette annexe : voir Journal Officiel de l'Office européen des brevets, No.12/82

33

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 3457016 B1